# EUROPEAN PATENT SPECIFICATION

(11) **EP 3 711 636 B1**
(45) Date of publication and mention of the grant of the patent: **05.01.2022**
(21) Application number: 20164447.3
(22) Date of filing: 20.03.2020
(51) Int. Cl.: A47J 27/21

(54) **ELECTRIC KETTLE**
ELEKTRISCHER WASSERKOCHER
BOUILLOIRE ÉLECTRIQUE

(30) Priority: 21.03.2019 KR 20190032608
(43) Date of publication of application: 23.09.2020
(73) Proprietor: LG Electronics Inc., 07336 SEOUL (KR)
(72) Inventor: PARK, Jongwon, 08592 Seoul (KR); SI, Minkyu, 08592 Seoul (KR)
(74) Representative: Ter Meer Steinmeister & Partner

(56) References cited:
- CN-A- 108 851 975
- CN-A- 108 937 568
- CN-U- 204 158 224
- US-A- 3 716 169
- US-A1- 2017 143 154

## Description

### BACKGROUND

The present disclosure relates to an electric kettle.

In general, an electric kettle is a device that is supplied with electricity to heat water contained in a main body by using a heating means such as a heater. An electric kettle is configured such that a main body is detachable from a base to which power is supplied. The main body is heated in a state of being seated on the base and is separated from the base by holding a handle and lifting the main body. This type of an electric kettle is called many names, such as a wireless electric kettle, a wireless electric pot, and a coffee pot.

In such an electric kettle, a main body may have a complicated shape and may be made of a plastic material so as to facilitate the arrangement of the internal structure. However, when the electric kettle is used for a long time, harmful components of plastics or fine plastic components may be dissolved in hot water, and the electric kettle is vulnerable to scratches, thus causing internal contamination problems.

If a main body is made of a glass material, an electric kettle is excellent in hygiene and looks very good. However, there is a risk of damage due to impact or the like, heavy weight makes it inconvenient to use, and molding is not easy.

Korean Utility Model Registration No. 20-0406420 discloses a wireless electric pot that has a main body made of stainless steel and is capable of heating water contained therein. In such a structure, the main body is made of a stainless material, which is very hygienic and durable.

However, in such a structure, when water boils, the temperature of the main body also rises, which may cause burns when a user's body contacts the outer surface of the main body. Also, there is a problem that the water is cooled quickly after the heating is completed, thus increasing power consumption.

US Patent No. 7091455 discloses an electric kettle in which a body where water is heated is provided with an inner container and an outer container, which are made of stainless steel, and the body has a double-layer vacuum structure to improve heat insulation performance.

However, in such a structure, there is a problem in that the inside of the body is not easy to check because a window for making the inside of the body visible is not provided.

In a case in which the window is formed in a double wall structure, it is difficult to implement the sealing structure of the window and it is difficult to perform the assembling work.

CN 108 851 975 A provides a water window structure of a double-layer kettle which comprises a hardware body, a plastic case and a water window assembly; the plastic case is provided with a first water window hole, and the metal kettle body is provided with a second water window hole; the outer circumference of the second water window hole is provided with a bent snap ring; the water window assembly comprises a water window, a first fixing member, a second fixing member, a first sealing ring and a second sealing ring; the first fixing member and the second fixing member are fixedly connected to form a fixing groove and a receiving groove having opposite opening directions; the first sealing ring and the water window are located in the receiving groove; the second sealing ring and the snap ring are located in the fixing groove; the water window is a glass water window, a ceramic water window or a stone material water window.

CN 108 937 568 A discloses an electric kettle with a replaceable inner container. The electric kettle structurally comprises a power supply base, the power supply base is provided with an electrification ring, a kettle base, a contact electricity ring, an electrification switch and a kettle shell, the electrification ring is fixedly connected to the upper end of the power supply base, the kettle base is movably connected to the upper surface of the power supply base, the contact electricity ring is fixedly connected into the kettle base, the electrification switch is fixedly connected to the left end of the kettle base, and the kettle shell is fixedly connected to the upper end of the kettle base. Through the combination of a clamping ring and a clamping buckle, when the inner container needs to be replaced, firstly, the clamping ring is taken out of the clamping buckle, then the kettle base and a heating plate are taken down from the kettle shell together, and then the inner container is drawn out from an embedding layer to be replaced.

### SUMMARY

The present disclosure provides an electric kettle capable of improving heat insulation performance and reducing power consumption.

The present disclosure provides an electric kettle in which a window can be mounted on a body of a double wall structure so as to maintain a reliable sealed state.

The present disclosure provides an electric kettle capable of improving user convenience by enabling a state inside a body to be checked.

The present disclosure provides an electric kettle capable of improving assembling and productivity by facilitating the assembling of a window.

The present disclosure provides an electric kettle capable of improving an appearance of a body.

The object is solved by the features of independent claim 1. Preferred embodiments are given by the dependent claims.

One embodiment of the present disclosure may include: a body formed by connecting an outer body and an inner body spaced apart from each other so as to form a heat insulation space; a mounting port passing through the inner body and the outer body; a window mounted on the mounting port; and a window gasket sealing a gap between the inner body and the window.

The circumference of the window may be doubly sealed in contact with the outer body and the window gasket.

The window gasket may be fixed along the end of the inner body.

Preferably, the window may be press-fitted into the window gasket.

The front surface of the window and the outer surface of the outer body may be coplanar.

Side protrusions supporting the window gasket and the outer mounting portion of the outer body at the same time may be formed along the circumference of the window.

According to the present invention, an electric kettle includes: a body made of a metal material, formed by an outer body and an inner body having a cylindrical shape with an opened upper surface and an opened lower surface, wherein a heat insulation space is formed between the outer body and the inner body; a heating module configured to form a bottom of a space for accommodating water inside the body and for heating the water; a mounting port opened to pass through the outer body and the inner body; a window mounted on the mounting port to see through an inside of the body; and a window gasket disposed along a circumference of the window to seal a gap between the inner body and the window.

The window is doubly sealed in contact with the outer body and the window gasket.

The window may extend between an upper end of the heating module and an upper end of the body in a vertical direction.

The window may be smaller in width than in length.

The windows may be made of transparent material.

The window may be located with a certain distance to the upper end of the heating module and a certain distance to an upper end of the body in a vertical direction.

Preferably, the distances are similar.

A front surface of the window may cover the mounting port.

Preferably, the front surface of the window and the outer body may be coplanar.

A circumferential surface of the window may extend rearward so as to be in contact with both the outer body and the inner body on which the window gasket is mounted.

The window includes a window front surface formed in a shape corresponding to the mounting port; a window side surface extending rearward along a circumference of the window front surface; and optionally a window flange extending outward along a circumference of the see-through side surface.

An extended length of the window side surface may correspond to a distance between the outer body and the inner body. So, the window side surface fits and closes the space between the outer body and the inner body.

An outer mounting portion bent toward the inner body along the mounting port may be formed in the outer body.

Preferably, the outer mounting portion may be in contact with the window side surface.

An inner mounting portion stepped toward the outer body along the mounting port may be formed in the inner body.

Preferably, the window gasket and the window flange may be sequentially seated on the inner mounting portion.

An end of the outer mounting portion may further extend toward the window side surface than an end of the inner mounting portion.

The inner mounting portion may be formed to have a width corresponding to a width of the window flange.

A plurality of side protrusions protruding outward may be formed on the window side surface.

Preferably, the plurality of side protrusions may be inserted between the inner mounting portion and the outer mounting portion.

The plurality of side protrusions may protrude along the window side surface at regular intervals.

The window gasket may be inserted and/or mounted along an end of the inner mounting portion.

Preferably, the window gasket may be press-fitted between the window flange and the inner mounting portion and between the side protrusions and the inner mounting portion in a state in which the window is mounted.

A front surface of the side protrusion may support an end of the outer mounting portion, and a rear surface of the side protrusion may support the window gasket.

The window gasket may be mounted along an end of the opened inner body.

The window gasket may be press-fitted between the window flange and the side protrusion protruding along the window side surface.

The window gasket may include at least one of: a first rib disposed along the window flange and seated on the window flange; a second rib positioned at a front side spaced apart from the first rib and formed along the first rib; and a connecting portion configured to connect ends of the first rib and the second rib and to be in contact with the window side surface.

An insertion groove, into which the end of the opened inner body is inserted, may be formed between the first rib and the second rib.

A width of the second rib may be formed to be narrower than a width of the first rib.

A protrusion and a groove engaged with each other may be formed on surfaces where the window flange and the first rib face each other.

The first rib may be provided with a protrusion extending toward the window flange, and the protrusion may be formed along the window flange.

The protrusion may be provided in plurality, and the plurality of protrusions may be spaced apart from each other in a direction of a circumferential surface of the body.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view of an electric kettle acc. to an embodiment of the present disclosure.
Fig. 2 is an exploded perspective view of the electric kettle.
Fig. 3 is a cross-sectional view taken along line 3-3' of Fig. 1.
Fig. 4 is a cross-sectional view taken along line 4-4' of Fig. 1.
Fig. 5 is a perspective view of a lid viewed from below, acc. to an embodiment of the disclosure.
Fig. 6 is an exploded perspective view of the lid, when viewed from below.
Fig. 7 is a cross-sectional view showing a state in which the lid is mounted on a body that is one component of the electric kettle.
Fig. 8 is an exploded perspective view of an upper body that is one component of the electric kettle.
Fig. 9 is a partial enlarged view showing an operation portion of the upper body.
Fig. 10 is a cutaway perspective view of a connecting structure of the body and the upper body.
Fig. 11 is a cutaway perspective view showing the inside of the electric kettle.
Fig. 12 is a perspective view of the body.
Fig. 13 is a perspective view of the body, when viewed from below.
Fig. 14 is a longitudinal sectional view of the body.
Fig. 15 is a partial enlarged cutaway view of the lower end of the body.
Fig. 16 is an exploded perspective view showing a connecting relationship of the body and a window.
Fig. 17 is a partial cutaway perspective view showing a connecting relationship of the body and the window.
Fig. 18 is a cross-sectional view showing a state in which the body is seated on a base that is one component of the electric kettle.
Fig. 19 is an exploded perspective view showing a state in which a bottom cover of the electric kettle is separated, when viewed from below.
Fig. 20 is an exploded perspective view showing a connecting structure of the body and a heating module that is one component of the electric kettle.
Fig. 21 is an exploded perspective view of the heating module.
Fig. 22 is a perspective view of the bottom cover.
Fig. 23 is an exploded perspective view of the bottom cover, when viewed from above.
Fig. 24 is an exploded perspective view of the bottom cover, when viewed from below.
Fig. 25 is a perspective view of the base being one component of the electric kettle, when viewed from above.
Fig. 26 is a perspective view of the base that is one component of the electric kettle, when viewed from below.
Fig. 27 is a perspective view showing a state in which a base cover of the base is removed.
Fig. 28 is a cross-sectional view showing a mounting state of the heating module and the base.

### DETAILED DESCRIPTION OF THE EMBODIMENTS

Hereinafter, specific embodiments of the present disclosure will be described in detail with reference to the accompanying drawings. However, the scope of the present disclosure is not limited to proposed embodiments, and other regressive inventions or other embodiments included in the scope of the present disclosure may be easily proposed through addition, change, deletion, and the like of other elements.

### [Overall Structure]

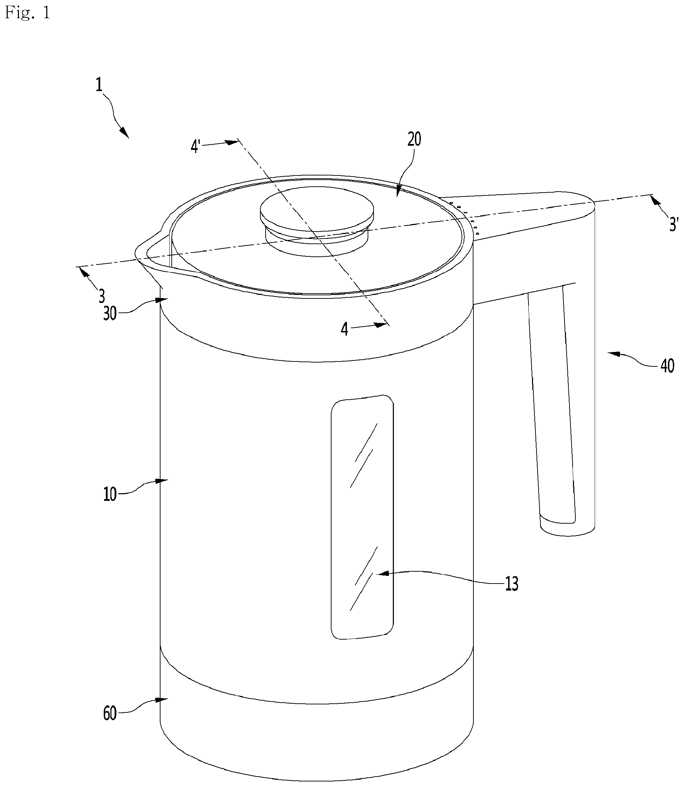

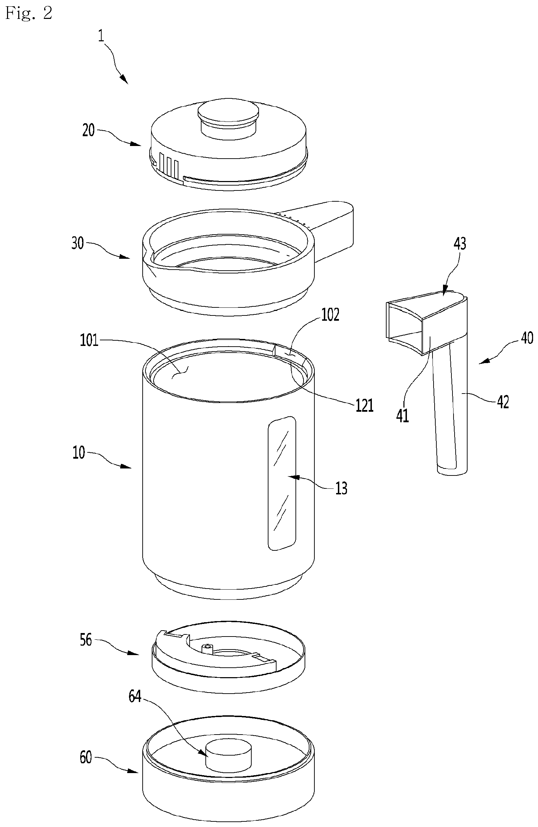

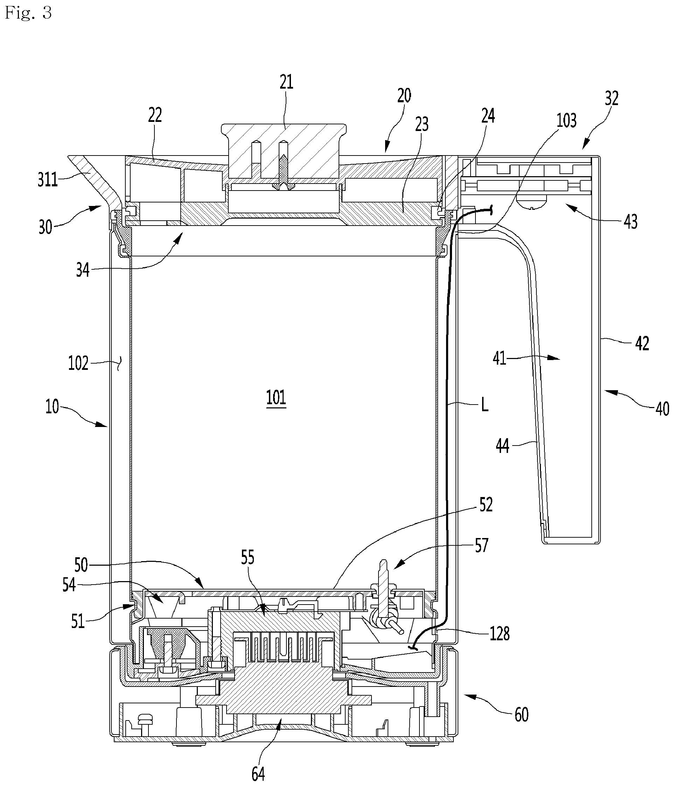

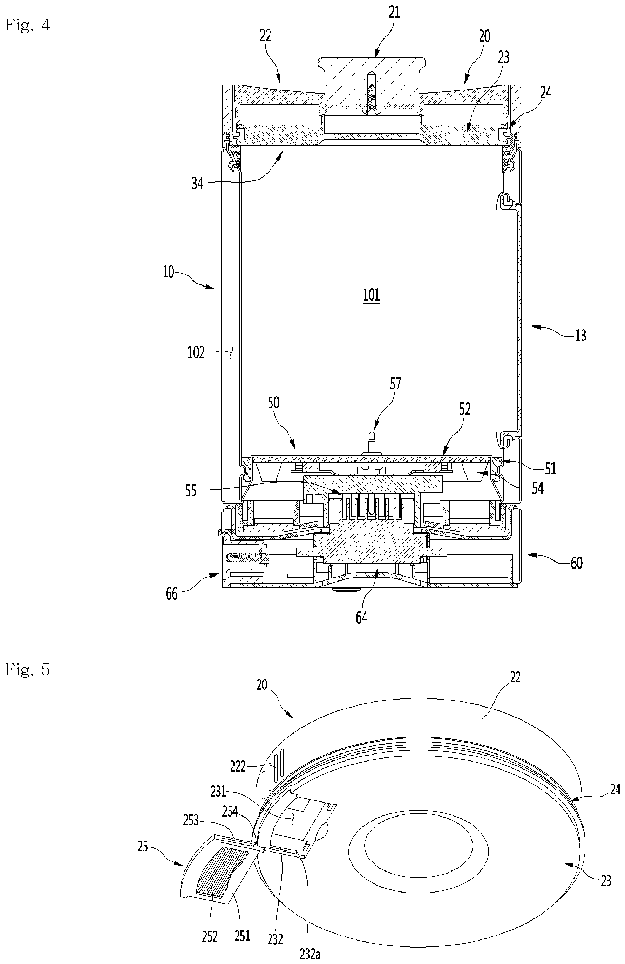

Fig. 1 is a perspective view of an electric kettle according to an embodiment of the present disclosure. Fig. 2 is an exploded perspective view of the electric kettle. Fig. 3 is a cross-sectional view taken along line 3-3' of Fig. 1. Fig. 4 is a cross-sectional view taken along line 4-4' of Fig. 1.

As shown in Figs. 1 to 4, an electric kettle 1 according to an embodiment of the present disclosure is formed in a cylindrical shape as a whole and may be configured to include a base 60, the body 10, an upper body 30, a heating module 50, a lid 20, and a handle 40.

The other components except for the handle 40 are formed in a cylindrical shape and arranged vertically. The handle 40 may be configured to protrude from one side of the upper body 30.

The base 60 is disposed on bottom side of the electric kettle, preferably at the floor surface.

A power cord can be connected to the base 60 such that external power can be supplied thereto. The body 10 in an assembled state may be seated on the upper surface of the base 60. The body 10 may be formed in a cylindrical shape to define a heating space 101 in which water is contained and heated therein. The body 10 may be supplied with power in a state of being seated on the base 60. A power supply method of the base 60 and the body 10 may be a power supply method by contact of a power terminal. Also, the power supply method of the base 60 and the body 10 may be an electromagnetic induction method. To this end, the base 60 is provided with a lower power module 64 serving as a primary coil, and the body 10 may be provided with an upper power module 55 serving as a secondary coil.

The body 10 may be formed in a cylindrical shape and has an opened upper surface and an opened lower surface. The opened lower surface of the body 10 may be covered by the heating module 50, and the upper surface of the body 10 may be covered by the lid 20. Since the heating module 50 forms a part of the lower portion of the body 10, the heating module 50 may also be referred to as a lower body 50.

The heating module 50 may include a heating plate 52 forming the bottom surface of the inside of the body 10, and a heater 54 for heating the heating plate 52. The heating plate 52 may be heated by power supplied from the upper power module 55. The heating module 50 may include a bottom cover 56 that forms the lower surface of the body 10.

The upper body 30 may be mounted on the upper end of the body 10. The upper body 30 may be made of the same metal material as that of the body 10, or may be made of another material but have the same texture. The upper body 30 may be formed in a cylindrical or ring shape having a low height. A spout 311 may protrude from one end of the upper body 30 such that water inside the body 10 can be poured.

The handle 40 may be mounted on the side opposite to the spout 311. The handle 40 may be mounted on a handle cover 32 extending outward from one side of the upper body 30, and may be fixedly mounted on the outer surface of the upper body 30.

The handle 40 may include a handle body 41 inserted into the handle cover 32 and extending downward to be gripped by a user, a handle deco 42 surrounding the outer surface of the handle body 41, and a grip portion 44 forming a part of the outer surface of the handle body 41 facing the body 10. The handle deco 42 may be made of the same metal or the same appearance as those of the body 10 and the handle cover 32. The grip portion 44 may be made of a rubber or a silicone material so as not to slip when the user grips the handle 40.

The handle cover 32 may be provided with an operation portion 323. The user may input operations such as an on-off operation and/or a temperature control through the operation of the operation portion 323. To this end, a handle printed circuit board (PCB) 43 may be provided inside the handle cover 32, that is, inside the handle 40. An electric wire L connecting the handle PCB 43 and the heating module 50 may be configured to pass through the body 10. Meanwhile, the handle cover 32 may be further provided with a display 322 for displaying the operating state of the electric kettle 1.

Meanwhile, the opened upper surface of the electric kettle 1, that is, the upper surface of the upper body 30, may be covered by the lid 20. The lid 20 may form the upper surface of the electric kettle 1 in a closed state and may contact the circumference of the upper body 30 to seal the inside of the electric kettle 1. When the electric kettle 1 is tilted in a state in which the lid 20 is closed, the electric kettle 1 may be configured such that water is poured to the spout 311 through the lid 20.

Hereinafter, detailed components of the electric kettle 1 will be described in detail. Components not described among the components shown in Figs. 3 and 4 will be described below.

### [Structure of Lid]

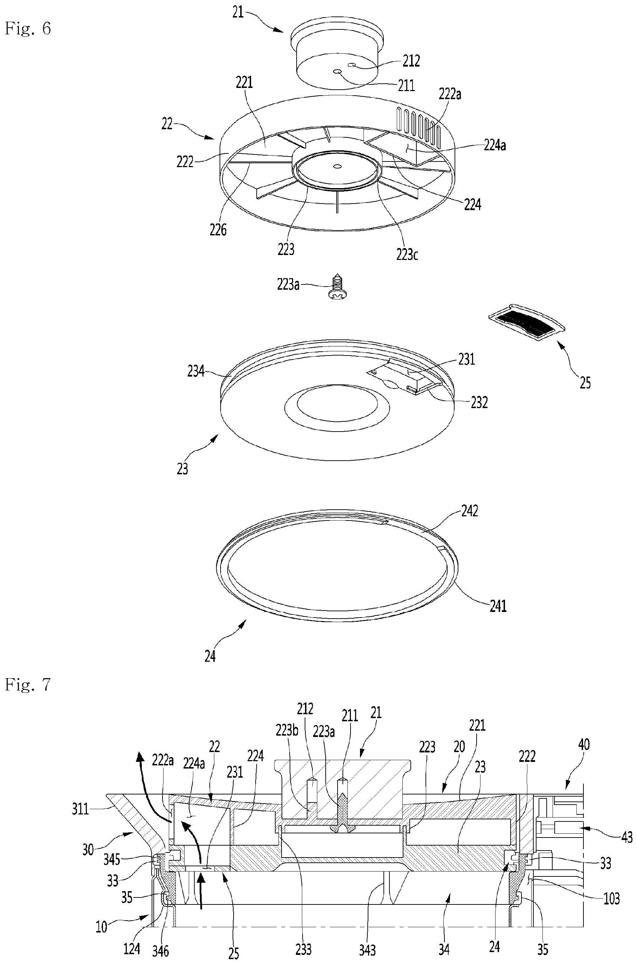

Fig. 5 is a perspective view of the lid, when viewed from below, according to an embodiment of the present disclosure. Fig. 6 is an exploded perspective view of the lid, when viewed from below.

Fig. 7 is a cross-sectional view showing a state in which the lid is mounted on the body that is one component of the electric kettle.

As shown, the lid 20 may be formed in a shape corresponding to the inner cross-section of the electric kettle 1. The appearance of the lid 20 may be formed by combining an upper case 22 forming an upper appearance and a lower case 23 forming a lower appearance.

The upper case 22 may form the upper surface and a part of the circumferential surface of the lid 20, and a lid handle 21 may be mounted at the center of the upper case 22. A coupling hole 211 may be formed at the center of the lid handle 21, and a screw 223a passing through the center of the upper case 22 may be coupled to the coupling hole 211. A lid protrusion 223b and a lid groove 212 connected to each other may be respectively formed on the lower surfaces of the upper case 22 and the lid handle 21 to prevent the lid handle 21 from rotating.

The upper case 22 may include a circular upper surface 221 and a circumferential surface 222 extending downward from the circumference of the upper surface 221. A lid connecting portion 223 protruding downward may be formed at the center of the upper surface 221. The lid connecting portion 223 may be formed in a circular shape, and the inner portion of the lid connecting portion 223 may be recessed to define a space in which the handle lid 20 can be seated. A groove 223c into which a lower rib 233 described below is inserted may be formed at the extended lower end of the lid connecting portion 223.

A plurality of reinforcing ribs 226 may be formed radially from the outer surface of the lid connecting portion 223 to the circumferential surface 222 of the upper case 22.

A water outlet 222a passing through the circumferential surface 222 may be formed at one side of the circumferential surface 222 of the upper case 22. The water outlet 222a may be mounted to be aligned at a position corresponding to the spout 311 as a portion that becomes the outlet of the lid 20 when water inside the electric kettle 1 is poured. The water outlet 222a may be formed in a grill-like shape as shown, or may include a plurality of holes.

Inner walls 224 extending rearward may be formed at both sides of the water outlet 222a. The inner walls 224 may be formed along the circumference of a water inlet 231 described below. The front end of the inner wall 224 may be in contact with both ends of the water outlet 222a. The opened lower end of the inner wall 224 may be covered by the lower case 23 when the upper case 22 and the lower case 23 are connected to each other, and may define a water outlet space 224a to communicate from the water inlet 231 to the water outlet 222a. Therefore, water flowing into the water inlet 231 may be discharged to the water outlet 222a through the water outlet space 224a. That is, water inside the electric kettle 1 may be poured through the spout 311 after passing through the lid 20.

The lower case 23 may be formed in a disk shape corresponding to the upper case 22, and the circumference of the lower case 23 may be connected to the circumference of the upper case 22. A lower rib 233 may protrude from the central portion of the lower case 23 corresponding to the lid connecting portion 223. The lower rib 233 may be inserted into the groove 223c formed at the end of the lid connecting portion 223, and may be joined to the groove 223c by ultrasonic welding in the inserted state. A lid gasket groove 234, on which a lid gasket 24 is mounted, may be formed on the circumference of the lower case 23.

The lid gasket 24 may be formed in a ring shape and may be made of a rubber or a silicone material. The lid gasket 24 may be in close contact with the inner circumferential surface of the upper body 30 in a state in which the lid 20 is mounted on the electric kettle 1, thereby sealing the inside of the electric kettle 1.

A gasket rib 241 protruding outward may be formed on the outer surface of the lid gasket 24. The gasket rib 241 is a portion that is substantially in contact with the inner circumferential surface of the upper body 30. The gasket rib 241 may be completely in contact with the inner circumferential surface of the upper body 30 while being deformed when the lid 20 is mounted or removed.

Meanwhile, a filtering member 25 may be mounted on the water inlet 231. The filtering member 25 may cover the water inlet 231 to filter foreign matters of water flowing toward the water inlet 231. The filtering member 25 may include a filter frame 251 having an opened central portion and a filter 252 for covering the opening. For example, the filter 252 may be provided with a mesh.

The filtering member 25 may be configured to be detachable from the water inlet 231. When the filtering member 25 is not required, the filtering member 25 may be separated from the lid 20 so as to discharge water more smoothly.

In more detail, the filter frame 251 may be formed in a size corresponding to that of the water inlet 231. A sliding rib 253 may protrude from both left and right ends of the filter frame 251, and a filter restraint protrusion 254 may be formed behind the sliding rib 253. The filter restraint protrusion 254 may protrude toward both sides at a position spaced apart from the rear end of the filter frame 251.

A sliding groove 232, into which the sliding rib 253 is inserted, may be formed at both sides of the water inlet 231. The sliding rib 253 may guide the movement of the filtering member 25 while moving along the sliding groove 232.

A filter restraint portion 232a, to which the filter restraint protrusion 254 is caught and restrained, may be formed at the rear of the sliding groove 232. In a state in which the filtering member 25 is mounted on the water inlet 231, the sliding rib 253 may be accommodated inside the sliding groove 232, and the filter restraint protrusion 254 may be caught and restrained to the filter restraint portion 232a. Therefore, the filtering member 25 may maintain the mounted state, and if necessary, may be slidably separated by pulling forward.

Meanwhile, the gasket rib 241 protrudes outward along the circumference of the lid gasket 24, but the gasket rib 241 is not formed at a portion corresponding to the water inlet 231. Also, a gasket recess 242 may be further formed in the lid gasket 24 corresponding to the water inlet 231. Therefore, even in a state in which the lid gasket 24 is mounted on the lid 20, the lid gasket 24 and the filtering member 25 may be prevented from interfering with each other even if the filtering member 25 is slidably detached from the water inlet 231.

The lid 20 may be seated on the upper body 30 in a state of being inserted into the opened upper surface of the electric kettle 1. In a state in which the lid 20 is seated on the upper body 30, the upper end of the upper case 22 is positioned at the same height as that of the upper end of the upper body 30. Therefore, the lid 20 and the upper body 30 may have the sense of unity.

Hereinafter, the seating structure of the lid 20 and the structure of the upper body 30 will be described in detail. Components not described among the components shown in Fig. 7 will be described below.

### [Structure of Upper Body]

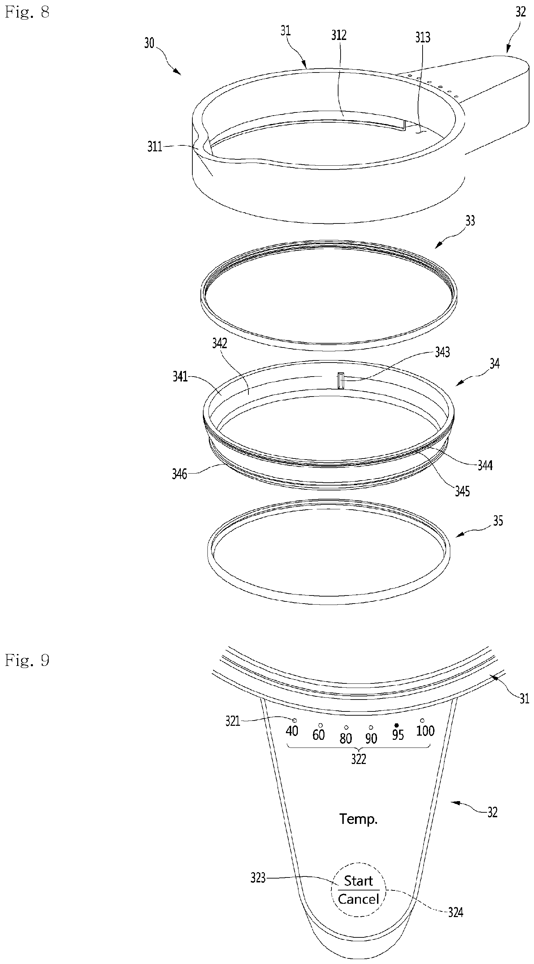

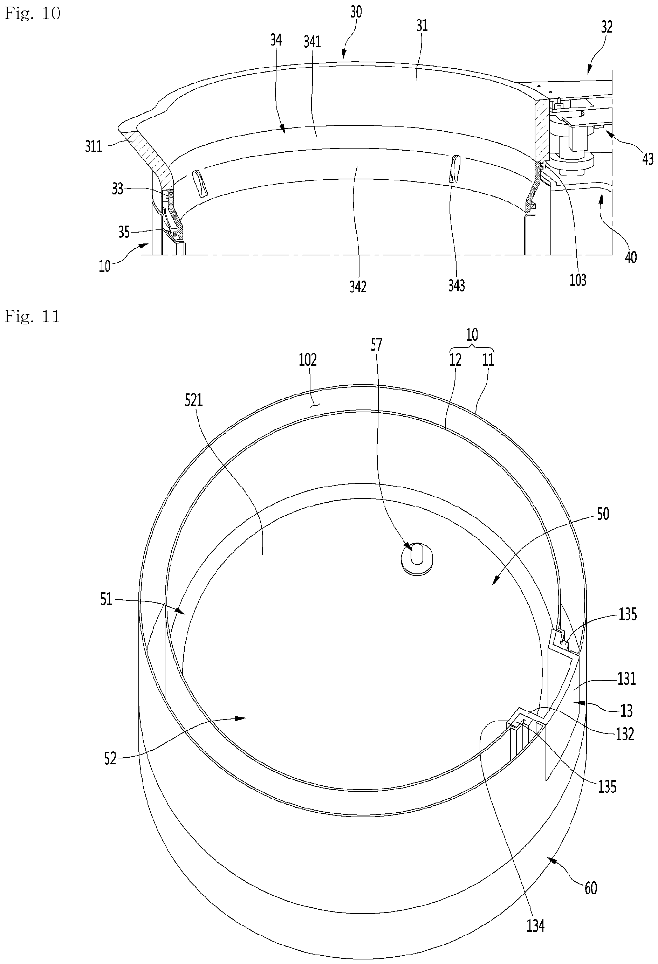

Fig. 8 is an exploded perspective view of the upper body that is one component of the electric kettle. Fig. 9 is a partial enlarged view showing the operation portion of the upper body. Fig. 10 is a cutaway perspective view showing a connecting structure of the body and the upper body.

As shown in Figs. 8 to 10, the upper body 30 may be mounted on the upper end of the body 10, and the lid 20 may be seated thereon. The upper body 30 may include a body top 31, a seating member 34 connected to the body top 31, and a pair of packings 33 and 35 provided in the seating member 34.

In detail, the body top 31 may be made of a metal material and may be surface-processed to have the same texture as the body 10. When the upper body 30 is mounted on the upper end of the body 10, only the body top 31 may be exposed to the outside, and the seating member 34 may be fixed to the upper end of the body 10. At this time, the body top 31 and the outer surface of the body 10 may be coplanar. So there is no step and thus a plane surface is provided.

The body top 31 may be formed in a ring shape having the same inner diameter and outer diameter as those of the body 10. The body top 31 provides a space for accommodating the lid 20 therein.

The recessed spout 311 may be formed at the upper end of one side of the body top 31. The handle cover 32 may be provided at the other side of the body top 31 facing the spout 311.

The handle cover 32 allows the handle 40 to be mounted, may be made of a plate-shaped metal material, and may be formed to accommodate the upper end of the handle 40. The handle cover 32 may form the operation portion on the upper surface 325, and the side surface 326 may extend downward along the circumference of the upper surface 325 of the handle cover 32. In this case, the upper surface 325 of the handle cover 32 is positioned at the same height as that of the upper end of the body top 31, and the lower end of the side surface 326 of the handle cover 32 correspond to the lower end of the body top 31. The opened front end of the handle cover 32 may have a shape corresponding to the outer surface of the body top 31 and may be connected by welding.

A body top opening 313 may be formed at the lower end of the body top 31 corresponding to the handle cover 32. The body top opening 313 may be formed to communicate with the front end of the handle cover 32, and may be formed in a shape recessed at the lower end of the body top 31. The body top opening 313 forms a hole passing through the body 10 when the upper body 30 and the body 10 are connected to each other, and forms a hole through which an electric wire L connected to the heating module 50 passes inside the handle cover 32 and the handle 40.

Meanwhile, as shown in Fig. 9, the upper surface of the handle cover 32 may be provided with an operation portion 323 for the user to perform a press operation and a display 322 for displaying the operating state of the electric kettle 1.

The operation portion 323 may be formed on the upper surface 325 of the handle cover by printing or surface processing. A switch and/or a sensor 323, preferably a touch sensor, may be provided below the operation portion 323, that is, at a corresponding position inside the handle cover 32 to sense the operation performed on the operation portion 323.

The display 322 may display or indicate a temperature of water inside the electric kettle 1 or the operation state of the electric kettle 1. The display 322 may include a plurality of holes 321, and LEDs disposed below the holes 321 may be turned on to illuminate the holes 321. The temperatures may be displayed by illuminating in the corresponding holes 321 having an adjacent printing or surface processing for indicating the temperature. The user can check the lighting of the corresponding hole 321 to know the current water temperature. In order to implement the operation portion 323 and the display 322, the handle PCB 43 may be disposed inside the handle cover 32.

Meanwhile, a packing groove 312 may be formed along the lower end of the inner surface of the body top 31. The packing groove 312 is a groove in which the upper packing 33 is mounted, and enables the fixed mounting and sealing of the seating member 34.

The seating member 34 may be injection-molded with a plastic material and may connect the upper body 30 and the body 10 and allow the lid to be seated.

In detail, the seating member 34 may be formed in a ring shape and may include a seating member upper portion 341 restrained to the upper body 30 and a seating member lower portion 342 restrained to the body 10. The seating member upper portion 341 may extend vertically and may be sealed in contact with the lid gasket 24 when the lid 20 is mounted.

An upper packing mounting portion 345, on which the upper packing 33 is mounted, may be formed on an outer surface of the seating member upper portion 341. The inner surface of the upper packing may be formed in a shape corresponding to the upper packing mounting portion 345 and may be connected to the upper packing mounting portion 345 in a sealed state. The body top 31 and the seating member 34 may be connected to each other by the upper packing 33 and may have a sealed structure at the same time.

The seating member lower portion 342 may be formed to be slanted such that the inner diameter is narrowed toward the lower side, and a plurality of lid supports 343 may be formed on the inner surface thereof. The lid support 343 protrudes such that the upper end is in contact with the lower surface of the lid 20, and the plurality of lid supports 343 may be disposed in a direction facing each other.

A lower packing mounting portion 346, on which the lower packing 35 is mounted, may be formed on the outer surface of the seating member lower portion 342. The lower packing 35 may be restrained to the inner surface of the body 10 in a state in which the lower packing 35 is mounted on the lower packing mounting portion 346. Therefore, the seating member 34 and the upper body 30 may be connected to the body 10 and may have a structure that can be sealed at the same time.

In detail, in a state in which the upper body 30 is mounted, the seating member 34 is fixed to the body top 31 by the upper packing 33. Therefore, the upper end of the body 10 is inserted between the body top 31 and the seating member 34 so as not to be exposed to the outside. Since the lower packing 35 fixed to the lower end of the seating member 34 is inserted into the body restraint groove 124 formed at the upper end of the inner surface of the body 10, the upper body 30 may maintain the state of being connected to the body 10.

In a state in which the upper body 30 is mounted on the body 10, the inner diameter of the lower end of the upper body 30 may be equal to the inner diameter of the body 10, and the outer diameter of the upper body 30 may be identical to the outer diameter of the body 10. Therefore, in a state in which the upper body 30 and the body 10 are connected to each other, stepped portions are not formed at both the inside and the outside, and the upper body 30 and the body 10 may form the same plane.

Hereinafter, the structure of the body 10 will be described in more detail with reference to the accompanying drawings.

### [Structure of Body]

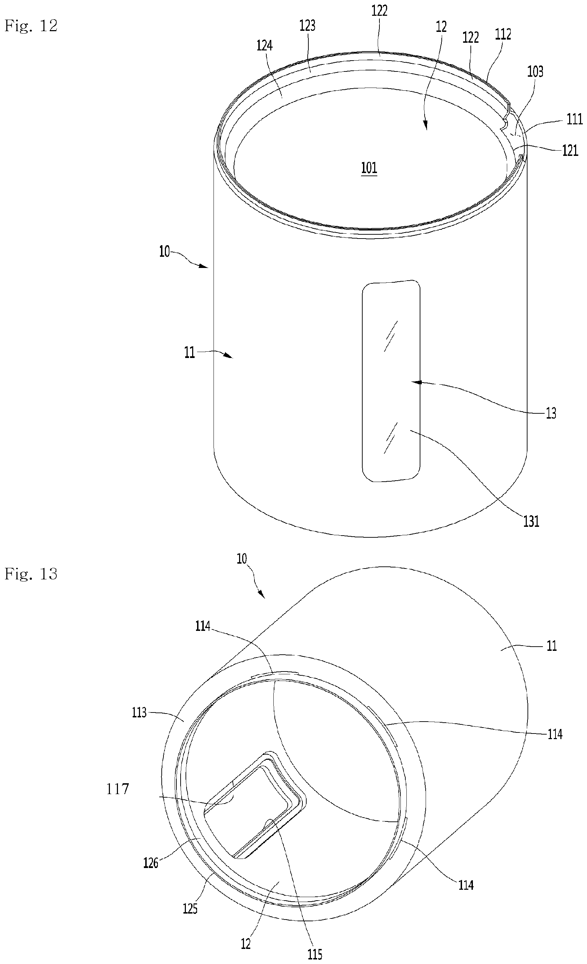

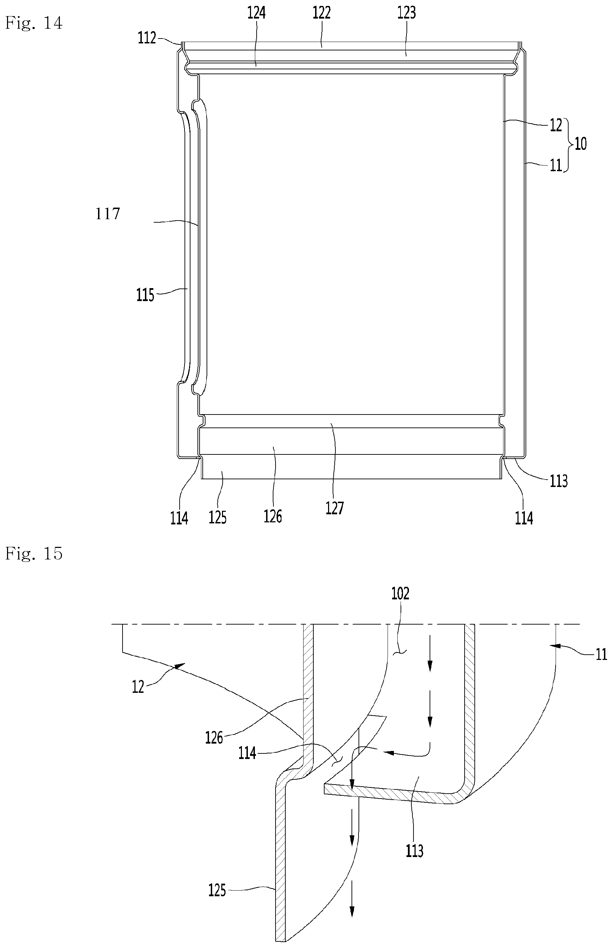

Fig. 11 is a cutaway perspective view showing the inside of the electric kettle. Fig. 12 is a perspective view of the body. Fig. 13 is a perspective view of the body, when viewed from below. Fig. 14 is a longitudinal sectional view of the body. Fig. 15 is a partial enlarged cutaway view of the lower end of the body.

As shown in Figs. 11 to 15, the body 10 may be formed in a cylindrical shape and may be formed to have the same outer diameter as those of the base 60 and the upper body 30. The body 10 may be formed in a cylindrical shape opened vertically, and the opened lower surface of the body 10 may be covered by the heating module 50 described below. That is, water contained in the body 10 is heated by the heating module 50.

The body 10 includes inner body 12 and an outer body 11, and a 2 heat insulation space is formed between the inner body 12 and the outer body 11, thereby significantly improved heat insulation performance as compared with a single wall structure.

The inner body 12 and the outer body 10 may be made of the same stainless material. The outer body 11 forms the appearance of the body 10, and the inner body 12 forms a space in which water is contained. The inner body 12 has a diameter smaller than that of the outer body 11, and thus the inner body 12 may be provided so as to be accommodated inside the outer body 11. Therefore, a space 102 may be formed between the outer body 11 and the inner body 12.

The space 102 between the outer body 11 and the inner body 12 may have an air layer formed therein to prevent heat from being directly transferred to the outer body 11. Therefore, the space 102 may be referred to as a heat insulation space 102. The outer body 11 may maintain a relatively low temperature even when the water contained in the inner body 12 is heated to a hot or boiled state.

The heat insulation space 102 may communicate with a space in which the heating module 50 is disposed and an inner space of the handle 40. Therefore, the electric wire L connected to the handle PCB 43 disposed at the handle 40 may pass through the heat insulation space 102 between the outer body 11 and the inner body 12 and be guided to the space in which the heating module 50 is disposed. Therefore, the space between the outer body 11 and the inner body 12 may be referred to as an electric wire passage or an electric wire guide space.

The body 10 may be formed by connecting the upper end and the lower end of the outer body 11 and the inner body 12 formed in the cylindrical shape. For example, the upper end and the lower ends of the outer body 11 and the inner body 12 may be connected to each other in a stacked state by welding. In this case, the other portions except for the upper end and the lower end of the outer body 11 and the inner body 12 may be spaced apart by a predetermined interval to have a heat insulation structure.

The structure of the upper end of the body 10 will be described in more detail. An outer upper end portion 112 may be formed at the upper end of the outer body 11. The outer upper end portion 112 may extend upward to form the upper end of the outer body 11, but may be formed in an inwardly stepped shape. The outer upper end portion 112 may be inserted into the upper body 30, and the outer surface of the upper body 30 and the outer surface of the outer body 11 may be coplanar.

An inner upper end portion 122 may be formed at the upper end of the inner body 12. The inner upper end portion 122 may extend upward to form the upper end of the inner body 12. The inner upper end portion 122 extends to the same height as that of the outer upper end portion 112 and may be in surface contact with the outer upper end portion 112. The outer upper end portion 112 and the inner upper end portion 122 may be inserted into a space between the body top 31 and the seating member 34 of the upper body 30 in a connected state. Therefore, the upper end of the body 10 may be covered by the upper body 30 so as not to be exposed.

An inner slant portion 123 may be formed along the lower end of the inner upper end portion 122. The inner slant portion 123 may be formed to be slanted such that the inner diameter is narrowed toward the lower side, and may have a slant corresponding to the slanted lower portion of the seating member 34. Therefore, the inner slant portion 123 enables the seating member 34 to be stably supported.

The body restraint groove 124 may be formed along the lower end of the inner slant portion 123. The body restraint groove 124 may be recessed outward such that the lower packing 35 mounted on the upper body 30 is press-fitted. In order to mount the upper body 30, the upper body 30 is inserted from above the body 10. In this case, the lower packing 35 may be press-fitted into the body restraint groove 124 to allow the upper body 30 to be fixed. The inner body 12 may extend downward from the end of the body restraint groove 124 and may extend downward in parallel with the outer body 11 while maintaining a predetermined distance.

Meanwhile, an outer cutout portion 111 and an inner cutout portion 121 may be respectively formed at the upper end of the inner body 12 and the upper end of the outer body 11, which correspond to the mounting position of the handle cover 32. The outer cutout portion 111 and the inner cutout portion 121 may be formed at the same position and may be formed at a position corresponding to the mounting position of the handle 40. The outer cutout portion 111 and the inner cutout portion 121 may communicate with the opened front surface of the handle cover 32. Therefore, when the upper body 30 is mounted on the body 10, the body top opening 313, the outer cutout portion 111, and the inner cutout portion 121 are positioned at positions corresponding to each other, an electric wire outlet 103 through which the electric wire L guided through the heating space 101 between the inner body 12 and the outer body 11 enters and exits may be formed.

The packing mounting portion 127 may be formed at the lower portion of the inner surface of the inner body 12. The packing mounting portion 127 is provided for mounting the heating module 50 and may protrude along the inner surface of the inner body 12 at a position corresponding to the mounting position of the heating module 50. The packing mounting portion 127 may be positioned slightly above the lower end of the outer body 11. Therefore, the heating module 50 may be mounted such that the heating module 50 is accommodated inside the inner body 12.

The packing mounting portion 127 may be formed by bending the inner body 12 and may be formed such that a plate packing 51, which is one component of the heating module 50, is caught and restrained.

A plate mounting portion 126 having an inner diameter larger than that of the packing mounting portion 127 may be formed at the lower end of the packing mounting portion 127. The plate mounting portion 126 is a portion in which a heating plate 52 described below is fixedly mounted and may have an inwardly recessed structure. In this case, the inner diameter of the plate mounting portion 126 may be equal to the inner diameter of the inner body 12 above the packing mounting portion 127. The plate mounting portion 126 has an inner diameter larger than that of the packing mounting portion 127 and an inner lower end portion 125 described below. The vertical width of the plate mounting portion 126 may be determined according to the vertical width of the plate mounting portion 126.

Meanwhile, an electric wire inlet 128 through which the electric wire L passes may be formed on one side of the plate mounting portion 126. The electric wire inlet 128 is a hole through which the electric wire L connected to the heating module 50 passes and may be opened at one side of the plate mounting portion 126 corresponding to the position of the handle 40. That is, the electric wire inlet 128 may be positioned on the same extension line as the electric wire outlet 103 below the electric wire outlet 103.

Therefore, the electric wire L introduced into the electric wire inlet 128 passes through the space between the inner body 12 and the outer body 11 and is guided to the inside of the handle cover 32 through the electric wire outlet 103 disposed at the upper end of the body 10.

The inner lower end portion 125 forming the lower end of the inner body 12 may be formed at the lower end of the plate mounting portion 126. The inner lower end portion 125 may be bent and extended downward from the lower end of the plate mounting portion 126.

The inner diameter of the inner lower end portion 125 may be greater than or equal to the inner diameter of the packing mounting portion 127 such that the heating module 50 is inserted through the inner lower end portion 125. The inner lower end portion 125 may extend further downward than the outer body 11 and may be connected to the bottom cover 56 described below.

Meanwhile, the lower end of the outer body 11 may extend to the lower end of the plate mounting portion 126 of the inner body 12. An outer lower end portion 113, which is bent toward the inner side, that is, the outer surface of the inner body 12, may be formed at the end of the outer body 11 corresponding to the plate mounting portion 126.

The outer lower end portion 113 may be formed at a height corresponding to the lower end of the plate mounting portion 126 and may extend to the outer end of the inner body 12. That is, the extended end of the outer lower end portion 113 comes into contact with the lower end of the plate mounting portion 126 or the upper end of the inner lower end portion 125. The outer lower end portion 113 may be connected to the lower end of the plate mounting portion 126 or the upper end of the inner lower end portion 125 by welding. Therefore, the inner body 12 and the outer body 11 have a structure in which the upper end and the lower end are connected to each other.

Meanwhile, one or more body holes 114 may be formed along the outer lower end portion 113. The one or more plurality of body holes 114 may be disposed along the outer lower end portion 113 at regular intervals. The body hole 114 may be formed in a shape in which the extended end of the outer lower end portion 113 is cut away. The remaining portions of the outer lower end portion 113 except for the body hole 114 come into contact with the outer surface of the inner body 12. Therefore, the body hole 114 may naturally become an opening communicating with a space between the inner body 12 and the outer body 11 in the process in which the outer lower end portion 113 is connected to or comes into contact with the outer surface of the inner body 12.

The body 10 is made of a stainless material and is formed by a process such as welding. Therefore, the body 10 may be smoothed at its the processed portions by electropolishing and maintain a smooth surface of the internal space in which water can be stored or accommodated. Also, the inner and outer surfaces of the body 10 may have corrosion resistance through electropolishing. For this reason, the body 10 is subjected to the electropolishing process after the inner body 12 and the outer body 11 are connected to each other.

In order for electropolishing in a state in which the inner body 12 and the outer body 11 are connected to mold the body 10, electropolishing is performed after the body 10 is immersed in an electrolyte. In this process, due to the structural characteristics of the body 10, the electrolyte is inevitably introduced into the heat insulation space 102 between the inner body 12 and the outer body 11. That is, the electric wire inlet 128 and the electric wire outlet 103 are opened in a state in which the body 10 is molded, and when the body 10 is immersed in the electrolyte, the electrolyte is introduced through the electric wire inlet 128 and the electric wire outlet 103. Therefore, the electrolyte is inevitably introduced between the inner body 12 and the outer body 11.

When the body 10 is lifted after the electropolishing is completed, as shown in Fig. 15, the electrolyte between the inner body 12 and the outer body 11 may be smoothly discharged downward through the body hole 114. In addition, even when the body 10 is washed after the electropolishing is completed, the electrolyte between the inner body 12 and the outer body 11 is naturally discharged through the body hole 114 when the body 10 is immersed and washed in a cleaning solution and then lifted. Therefore, even when the electrolyte is removed after the electropolishing process and the body 10 is washed after the electropolishing, the remaining liquids of the body 10 may be smoothly discharged.

Meanwhile, a window 13 may be formed in the body 10. The window 13 allows the user to check the water level or the boiling state of water in the electric kettle 1 from the outside of the electric kettle 1 without opening the lid.

Hereinafter, the window and the mounting structure of the window will be described in more detail with reference to the accompanying drawings.

### [Structure of Window]

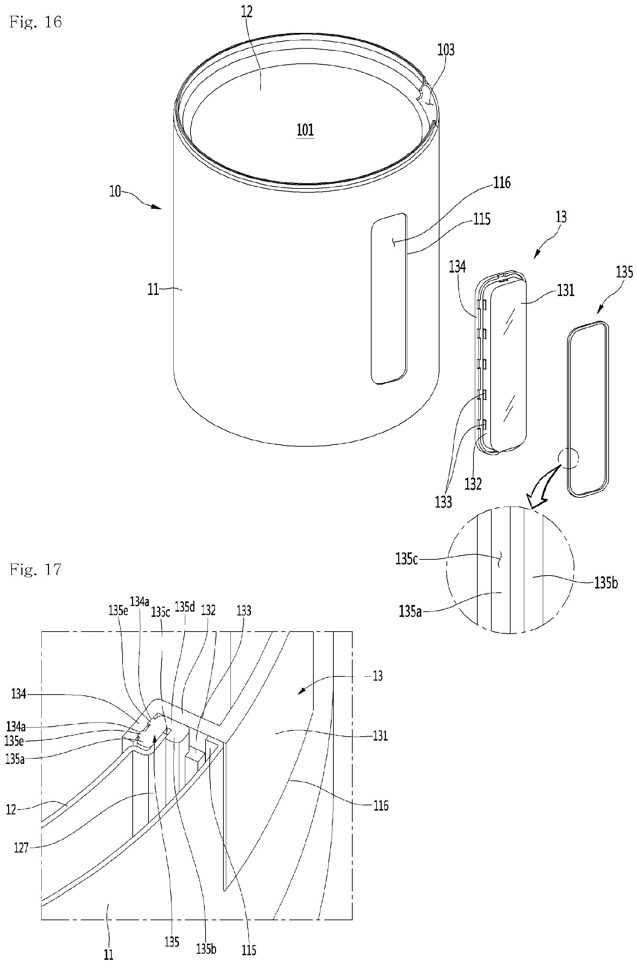

Fig. 16 is an exploded perspective view showing a connecting relationship of the body and the window. Fig. 17 is a partial cutaway perspective view showing a connecting relationship of the body and the window.

As shown in Figs. 16 and 17, the window 13 is mounted on a mounting port 116 passing through the inner body 12. The window 13 may be hermetically mounted to the double wall structure provided by the outer body 11 and the inner body 12.

In more detail, an inner mounting portion 117 and an outer mounting portion 115 for mounting the window 13 may be formed in the inner body 12 and the outer body 11. The inner mounting portion 117 and the outer mounting portion 115 may be opened at positions facing each other to form the mounting port 116 on which the window 13 is mounted.

The mounting port 116 may be formed in a shape corresponding to the window 13 and may be covered by the window 13. Both the inner mounting portion 117 and the outer mounting portion 115 come into contact with the window 13 when the window 13 is mounted. In a state in which the window 13 is mounted, the window 13 may form a part of the appearance of the outer surface and the inner surface of the body 10.

In detail, the inner mounting portion 117 may be opened to pass through the inner body 12. The inner mounting portion 117 may be recessed in an outwardly stepped shape and may be formed along the circumference of the window 13. That is, the inner mounting portion 117 may extend from the inner body 12 toward the outer body 11, and the extended end thereof may be bent inward.

Therefore, an opening in which the window 13 can be mounted may be defined by the inner mounting portion 117, and a window flange 134 may be seated on the stepped portion of the inner mounting portion 117. The opening formed by the inner mounting portion 117 may be formed in a shape corresponding to the window 13.

The inner mounting portion 117 may be provided with a window gasket 135, and a space between the window 13 and the inner body 12 may be completely sealed by the window gasket 135.

When the window gasket 135 and the window flange 134 are seated on the inner mounting portion 117, the window flange 134 and the inner surface of the inner body 12 may be coplanar. Therefore, since there are no portions protruding inward from the inner body 12 when the window 13 is fixedly mounted on the body 10, the internal structure is simple and easy to clean.

Meanwhile, the outer mounting portion 115 may be opened to pass through the outer body 11 and may be opened in a shape corresponding to a window front surface 131. The size of the opening formed by the outer mounting portion 115 may be slightly smaller than the size of the opening formed by the inner mounting portion 117.

The outer mounting portion 115 may be bent toward the inner body 12. Therefore, the bent portion of the outer mounting portion 115 may support the window side surface 132 in a close contact state. In this case, the window front surface 131 and the outer body 11 may be coplanar. Therefore, the outer surfaces of the window 13 and the outer body 11 are not protruded or recessed in a state in which the window 13 is mounted, thereby more improving the appearance.

In addition, the window 13 is in close contact with the circumference of the outer mounting portion 115 in a mounted state and is sealed by the inner mounting portion 117 and the window gasket 135, thereby preventing water from leaking from the body 10.

If necessary, an additional gasket may be further provided along the outer mounting portion 115. Since the additional gasket further seals a gap between the outer mounting portion 115 and the window 13, no gap occurs between the outer body 11 and the window 13.

The window 13 may extend in the vertical direction and may be fixedly mounted on each of the inner body 12 and the outer body 11. In this case, the window 13 may be mounted on the body 10 in a sealed state.

The window 13 includes a window front surface 131 exposed to the outside, a window side surface 132 which may be bent vertically along the circumference of the window front surface 131, and a window flange 134 bent outward along the extended end of the window side surface 132.

The window 13 is configured to check the water level inside the body 10. Therefore, the window 13 may be disposed to have a predetermined length in a region between the heating plate 52 and the upper end of the body 10.

In this case, the window front surface 131 may be formed in the same shape as that of the opening formed by the outer mounting portion 115. Therefore, the window front surface 131 may cover the opening in a state in which the window 13 is mounted. The bent outer mounting portion 115 may be in surface contact with the window side surface 132. When viewed from the outside, the window 13 and the outer body 10 may be seen as a close contact state.

The window side surface 132 extending rearward is formed along the circumference of the front surface of the window 13. The window side surface 132 may extend in a length corresponding to a distance between the outer surface of the outer body 11 and the inner surface of the inner body 12. That is, the window side surface 132 may extend from the outer body 11 to the inner mounting portion 117 of the inner body 12 in a state in which the window 13 is mounted.

Meanwhile, a side protrusion 133 for fixing the window gasket 135 is formed on the window side surface 132. The side protrusion 133 may protrude at a position spaced apart from the window flange 134 by a thickness of the window gasket 135. The side protrusion 133 may protrude perpendicularly to the window side surface 132. A plurality of side protrusions 133 may be continuously formed along the circumference of the window side surface 132 at predetermined intervals to entirely support the window gasket 135.

Therefore, when the window gasket 135 is mounted, one end of the window gasket 135 may be supported by the window flange 134, and the other end of the window gasket 135 may be supported by the side protrusion 133.

The bent end of the outer mounting portion 115 may be supported at one side of the side protrusion 133. That is, one side of the side protrusion 133 supports the window gasket 135, and the other side of the side protrusion 133 supports the outer mounting portion 115. Since the outer mounting portion 115 is supported by the side protrusion 133, the outer body 11 adjacent to the circumference of the window 13 may maintain the shape without being pushed or deformed inward even when an external force is applied.

The window flange 134 may be formed at the extended end of the window side surface 132. The window flange 134 is bent outward from the extended end of the window side surface 132 and may be formed along the circumference of the window side surface 132. The window flange 134 may be formed to have a width corresponding to a width of the inner mounting portion 117. Therefore, the window flange 134 may be seated inside the region of the inner mounting portion 117.

A gasket fixing groove 134a may be formed on the front surface of the window flange 134. The gasket fixing groove 134a may be formed along the window flange 134, and a plurality of gasket fixing grooves 134a may be disposed spaced apart from each other. When the window gasket 135 is mounted, a gasket fixing protrusion 135e of the window gasket 135 may be inserted into the gasket fixing groove 134a. The window gasket 135 may maintain a state of being mixed at the correct position of the window flange 134 without being separated or pushed.

Meanwhile, the window gasket 135 may be mounted between the inner mounting portion 117 and the window flange 134. The window gasket 135 may be made of an elastically deformable material such as a rubber or silicone. The window gasket 135 is sealed between the inner mounting portion 117 and the window flange 134 to prevent leakage of water inside the inner body 12.

In detail, the window gasket 135 may include a first rib 135a, a second rib 135b, and a connecting portion 135d connecting the first rib 135a to the second rib 135b.

The first rib 135a may be formed to have a width corresponding to a width of the window flange 134 and may be formed along the window flange 134 and the inner mounting portion 117. When the window gasket 135 is mounted, the first rib 135a may be positioned between the window flange 134 and the inner mounting portion 117. The gasket fixing protrusion 135e is formed on the first rib 135a. The gasket fixing protrusion 135e may be formed in a corresponding shape at a position corresponding to the gasket fixing groove 134a and may be connected thereto.

The second rib 135b may be positioned at a front side spaced apart from the first rib 135a and may be formed along the first rib 135a. The second rib 135b may be formed to be narrower than the width of the first rib 135a. When the window gasket 135 is mounted, the second rib 135b may be press-fitted into the inside of the opening formed by the inner mounting portion 117.

The connecting portion 135d may connect the end portions of the first rib 135a and the second rib 135b such that an insertion groove 135c is formed between the first rib 135a and the second rib 135b. The insertion groove 135c may be formed to have a width corresponding to a width of the end of the inner mounting portion 117. Therefore, when the window gasket 135 is mounted, the end of the inner mounting portion 117 may be inserted into the insertion groove 135c, and the window gasket 135 may maintain a state of being fixedly mounted on the inner mounting portion 117.

In order to assemble the window 13, the window gasket 135 is first mounted on the inner mounting portion 117. In this case, the window gasket 135 is press-fitted into the opening formed by the inner mounting portion 117 and is inserted such that the second rib 135b faces forward. The end of the inner mounting portion 117 may be inserted into the insertion groove 135c such that the window gasket 135 maintains the fixed state.

In such a state, the window 13 is mounted, and the window 13 is inserted into the mounting port 116 from the window front surface 131 inside the inner body 12. In a state in which the window 13 is mounted, the window front surface 131 and the outer surface of the outer body 11 are coplanar, and the outer mounting portion 115 is in contact with the window side surface 132. So, the window front surface 131 and the outer surface of the outer body 11 form a flushing or plane surface.

The window flange 134 is in contact with the first rib 135a of the window gasket 135 fixed to the inner mounting portion 117. In this case, an adhesive may be applied between the first rib 135a and the window flange 134, and the first rib 135a and the window flange 134 may be firmly connected to each other. The window 13 may be press-fitted into the opening of the window gasket 135 such that the window 13 maintains a state of being connected to the window gasket 135 without a separate adhesive.

Meanwhile, in a state in which the window 13 and the window gasket 135 are completely mounted, the side protrusion 133 may be fitted between the second rib 135b and the end of the outer mounting portion 115. Due to this structure, the window gasket 135 and the outer body 10 may be supported, and the window 13 may maintain a state of being firmly mounted on the body 10.

Hereinafter, the heating module 50 will be described in more detail with reference to the accompanying drawings.

### [Structure of Heating Module]

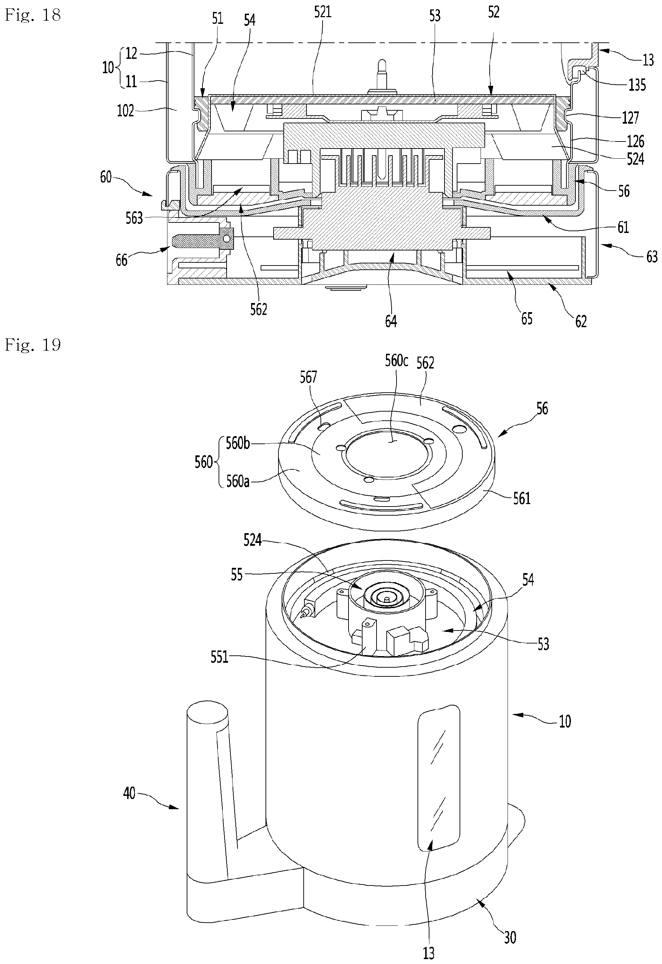

Fig. 18 is a cross-sectional view showing a state in which the body is seated on a base that is one component of the electric kettle.

As shown in Fig. 18, the heating module 50 may be mounted below the body 10. The heating module 50 covers the opened lower surface of the body 10 and forms the bottom surface of the heating space 101 provided in the body 10. The heating module 50 may form the appearance of the lower surface of the body 10 in a state in which the heating module 50 is mounted.

The heating module 50 may include a heating plate 52 forming the bottom surface of the heating space 101, a plate packing 51 for sealing a gap between the heating module 50 and the inner body 12 around the heating plate 52, a heater 54 for heating the heating plate 52, and an upper power module 55 for supplying power to the heater 54. The heating module 50 may further include a bottom cover 56 for covering the remaining components except for part of the upper power module 55 so as not to be exposed to the lower side of the body 10.

Meanwhile, since the heating module 50 and the bottom cover 56 are mounted through the opened lower surface of the body 10 and form at least part of the lower portion of the body 10, the heating module 50 and the bottom cover 56 may also be referred to as a bottom body. The body 10 may be seated on the base 60 in a state in which the bottom body is completely assembled. That is, in order to operate the electric kettle 1, the body 10 in which the bottom body is assembled must be seated on the base 60.

In a state in which the body 10 is seated on the base 60, the upper power module 55 of the body 10 and the lower power module 64 of the base 60 are in contact with each other, thereby enabling power to be supplied. In this state, the heater 54 may be heated by the supply of power to boil water.

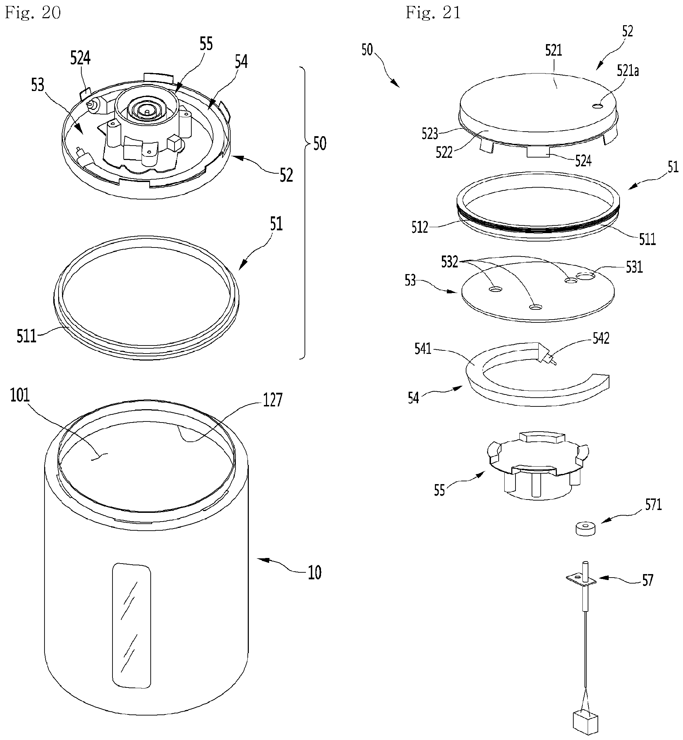

Fig. 19 is an exploded perspective view showing a state in which the bottom cover of the electric kettle is separated, when viewed from below. Fig. 20 is an exploded perspective view showing a connecting structure of the body and the heating module that is one component of the electric kettle. Fig. 21 is an exploded perspective view of the heating module.

As shown, the heating module 50 may be disposed inside the opened lower surface of the body 10. When the heating module 50 separates the bottom cover 56, the remaining components may be exposed through the opened lower surface of the body 10.

In particular, the upper power module 55 may be disposed at the center of the opened lower surface of the body 10, and the heater 54 is provided outside the upper power module 55 to heat the heating plate 52. The bottom cover 56 may be provided with a cover PCB 563 for supplying power to the heater 54.

In detail, the upper power module 55 is disposed at the center of the heating module 50. The upper power module 55 may be mounted at the center of the heater base 53. The heater base 53 may be connected to the lower surface of the heating plate 52, and the heater 54 may be mounted on the heater base 53.

The heater 54 may be configured as a sheath heater. The heater 54 may be disposed on a more outer side than the upper power module 55 and disposed along the circumference of the heating plate 52. Both ends of the heater 54 may be spaced apart from each other at adjacent positions, and a connection terminal 563c may be exposed at both ends of the heater spaced apart from each other and may be connected to the cover PCB 563 by an electric wire.

The heater 54 may be mounted on the heater base 53. The heater base 53 may be formed in a disk shape having a size corresponding to a size of the lower surface of the heating plate 52, and the heater 54 may be mounted on the heater base 53. The heater base 53 is made of aluminum or an aluminum alloy material having high thermal conductivity, such that the heat of the heater 54 can be uniformly transferred to an entire plate portion 521 of the heating plate 52. The heater base 53 and the heater may be integrally formed by die casting.

A cover coupling hole 532 for mounting the bottom cover 56 may be formed in the heater base 53, and a screw passing through the bottom cover 56 may be coupled to the cover coupling hole of the heater base 53. A temperature sensor mounting hole 531 in which the temperature sensor 57 is mounted may be further formed at the other side of the heater base 53.

The heater base 53 may be mounted on the lower surface of the heating plate 52. In this case, the heater base 53 may be completely in close contact with the lower surface of the heating plate 52, and may be blazing-processed to be integrally connected to the heating plate 52 so as to effectively transfer heat.

The heating plate 52 may form the bottom surface of the heating space 101, and at the same time, the heating module 50 may be fixedly mounted on the inside of the body 10. The heating plate 52 may be made of the same stainless material as that of the inner body 12 and may be inserted and mounted into the opened lower portion of the inner body 12 in a state of being connected to the heater base 53.

The heating plate 52 may be fixedly mounted on one side of the lower portion of the inner body 12 and may form a space in which the heater base 53, the heater 54, and the upper power module 55 are disposed. The heating plate 52 may include a plate portion 521 forming the bottom surface of the heating space 101 inside the inner body 12, a plate rim 522 on which the plate packing 51 is mounted around the plate portion 521, and a support 524.

In detail, the plate portion 521 may be formed in a circular shape and may have a diameter slightly smaller than the inner diameter of the inner body 12. The upper and lower surfaces of the plate portion 521 may have a planar structure, and the heater base 53 may be mounted on the lower surface of the plate portion 521. The size of the plate portion 521 is equal to the size of the heater base 53, Therefore, when the heater base 53 generates heat, the heater base may heat the entire plate portion 521, such that the entire bottom surface of the inside of the heating space 101 is heated.

A through hole 521a may be formed at one side of the plate portion 521. The through hole 521a is opened at a position corresponding to the temperature sensor mounting hole 531, and the temperature sensor 57 is fixedly mounted in the through hole 521a. In this case, a sensor packing 571 is provided around the temperature sensor 57, and the sensor packing 571 is mounted in the through hole 521a to seal the through hole 521a. The temperature sensor 57 is exposed above the plate portion 521 to sense, preferably directly sense, the temperature of water contained in the heating space 101.

Meanwhile, a plate rim 522 may be formed along the circumference of the plate portion 521. The plate rim 522 may be vertically bent downward from the circumference of the plate portion 521. The height of the plate rim 522 may correspond to the vertical height of the plate packing 51, and a bent portion 523 bent outward may be formed at the lower end of the plate rim 522 to allow the plate packing 51 to be seated on the plate rim 522.

The plate packing 51 may be mounted on the plate rim 522 and may be formed along the circumference of the plate portion 521. The plate packing 51 may seal a gap between the inner body 12 and the plate portion 521. The plate packing 51 may be inserted into the inner body 12 in a state of being mounted on the plate rim 522 and may be restrained to the packing mounting portion 127 of the inner body 12. Therefore, the heating plate 52 may be fixed to the inside of the inner body 12 by the plate packing 51, and at the same time, water may be prevented from leaking between the heating plate 52 and the inner body 12.

The plate packing 51 may have a packing groove 511 recessed in a shape corresponding to the packing mounting portion 127. The packing groove 511 may be formed along the outer surface of the plate packing 51, and the packing mounting portion 127 may be inserted into the packing groove 511 to fix the plate packing 51 and the heating plate 52 connected to the plate packing 51.

A sealing portion 512 may be further formed above the packing groove 511. The sealing portion 512 may be formed over the upper end of the plate packing 51 at the upper end of the packing groove 511. The sealing portion 512 may be configured such that a plurality of protrusions or ribs protrude along the circumference of the plate packing 51, and may be in contact with the inner surface of the inner body 12. The sealing portion 512 may seal a gap between the inner body 12 and the plate packing. The sealing portion 512 may protrude more outward than the packing groove 511 to form a stepped portion and may have a structure seated on the upper end of the packing mounting portion 127.

Meanwhile, the bent portion 523 at the lower end of the plate rim 522 may be formed in a shape slightly stepped from the plate rim 522 and may maintain a state in which the plate packing 51 is seated. A plurality of supports 524 may be formed at the lower end of the plate rim 522. The plurality of supports 524 may be arranged at regular intervals and may be arranged along the circumference of the plate rim 522.

The support 524 may extend downward. The support 524 may be formed to be slanted outward as the support 524 extends downward. Each of the supports 524 may be formed in a plate shape, and thus, may be elastically deformed when a force is applied toward the center of the heating plate 52.

The extended end of the support 524 extends to be supported to the lower end of the plate mounting portion 126. The lower end of the support 524 may extend to be slanted toward the more outer side than the outer diameter of the inner lower end portion 125. Therefore, in the process of inserting the heating plate 52, the support 524 may be pressed in contact with the inner surface of the inner lower end portion 125 while passing through the inner lower end portion 125 and may be elastically deformed toward the inner side.

When the heating plate 52 and the plate packing 51 are inserted up to the set plate rim 522, the support 524 is restored in the outward direction while passing through the inner lower end portion 125 as shown in Fig. 18, and the lower end of the support 524 is caught and restrained to the lower edge of the plate mounting portion 126 in the inside of the plate mounting portion 126. Therefore, the heating plate 52 may maintain the mounted state and may maintain a firmly connected state without moving downward to be arbitrarily separated or generating a gap.

Meanwhile, the remaining heating module 50 except the bottom cover 56 may be completely accommodated inside the body 10. When the bottom cover 56 is mounted, the remaining components of the heating module 50 provided inside the body 10 are covered and the appearance of the lower surface of the body 10 may be formed.

A cover hole 560c may be formed at the center of the bottom cover 56, and part of the upper power module 55 may be exposed through the cover hole 560c. The bottom cover 56 may be provided with a cover plate 565 for opening or closing part of the bottom cover 56.

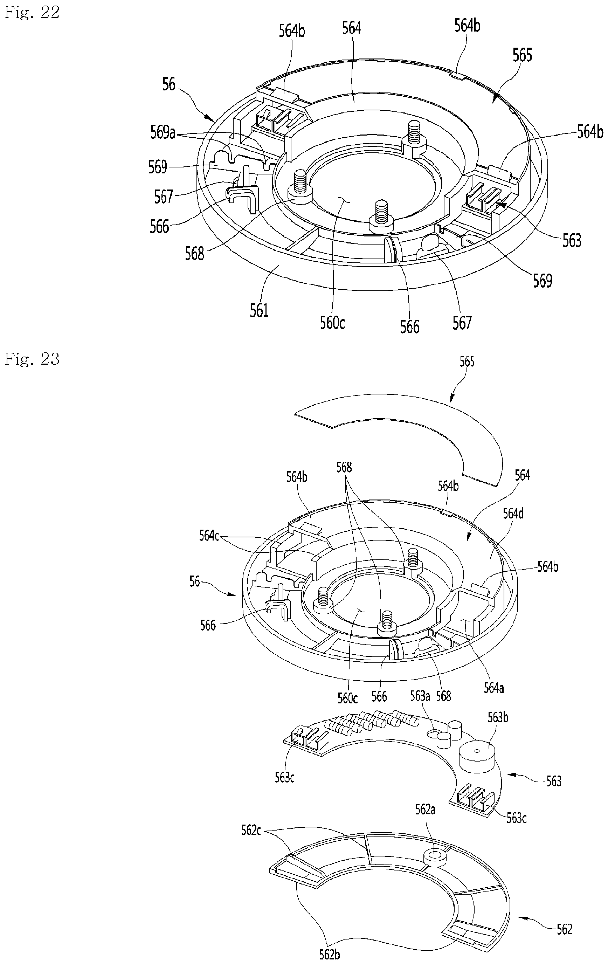

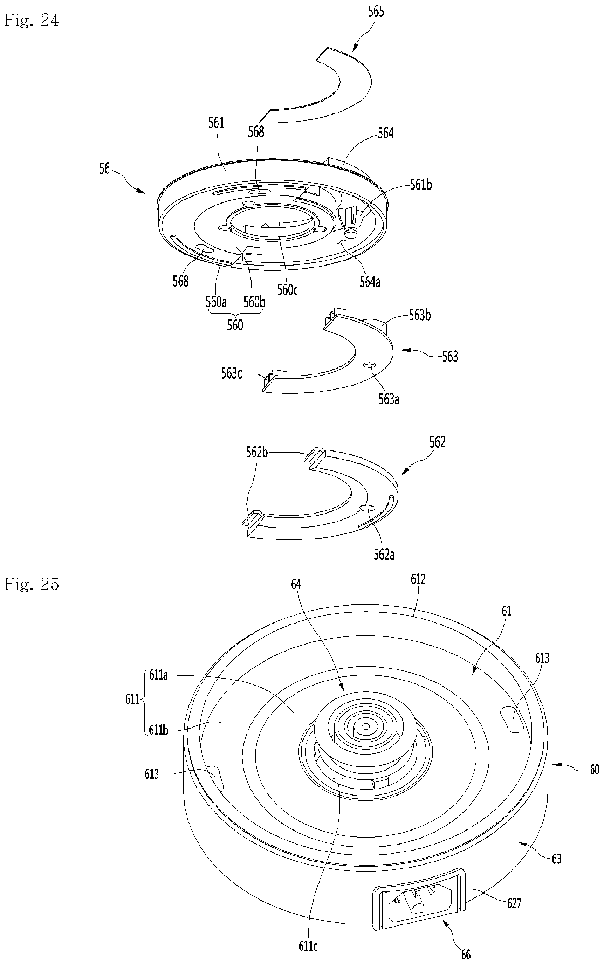

Fig. 22 is a perspective view of the bottom cover. Fig. 23 is an exploded perspective view of the bottom cover, when viewed from above. Fig. 24 is an exploded perspective view of the bottom cover, when viewed from below.

As shown in Figs. 22 to 24, the bottom cover 56 may be injection-molded of a plastic material and may be connected to the lower end of the body 10 to cover the opened lower surface of the body 10 and at the same time form the appearance of the lower surface of the body.

The bottom cover 56 may include a cover bottom surface 560 and a cover rim 561 bent along the circumference of the cover bottom surface 560. The cover bottom surface 560 may include a cover slant portion 560a in the center of the cover bottom surface 560 and a cover flat portion 560b outside the cover slant portion 560a. The cover slant portion 560a may have a slant that is lowered from the center toward the outside, and the cover flat portion 560b formed up to the cover rim 561 in parallel to the ground may be formed at the outer end of the cover slant portion 560a.

A cover hole 560c is formed at the center of the cover bottom surface 560, that is, at the center of the cover slant portion 560a, and the upper power module 55 is exposed through the upper module hole 560c. Therefore, when the body 10 is mounted on the base 60, the body 10 may be in contact with the lower power module 64.

The bottom cover 56 may cover all components of the heating module 50 except for the upper power module 55. A plurality of screw holes 568, to which screws are coupled, are formed along the circumference of the upper module hole 560c. The screw hole 568 may be formed at a position corresponding to the coupling hole 532 of the heater base 53. Therefore, the screw passes through the screw hole 568 and is coupled to the coupling hole 532, such that the bottom cover 56 can be firmly fixed to the body 10.

The cover rim 561 may be formed around the bottom surface 560 of the bottom cover 56. The cover rim 561 may extend upward along the circumference of the bottom cover 56 and may cover the inner lower end portion 125 from the outside. Therefore, when the bottom cover 56 is connected, the cover rim 561 may cover the inner lower end portion 125 from the outside. In this case, the inner surface of the cover rim 561 and the outer surface of the inner lower end portion 125 may be in close contact with each other such that the bottom cover 56 can maintain a stably and firmly connected state.

A plurality of bottom ribs 569 extending radially around the upper module hole 560c may be formed inside the bottom cover 56. The bottom ribs 569 may serve as a partition wall for reinforcing the strength of the bottom cover 56 and blocking water from flowing into the cover PCB 563 when water leakage occurs.

An electric wire groove 569a is recessed in the bottom ribs 569 such that the electric wires can be guided through the bottom ribs 569 to the cover PCB 563. In addition, a plurality of electric wire fixing portions 566, which are formed in a ring shape so as to fix the electric wires, may be formed between the plurality of bottom ribs 569.

Meanwhile, the central portion of the bottom cover 56, in which the upper power module 55 is positioned, may be formed to be slightly high. The cover slant portion 560a may be formed to have a slant that is lowered toward the outside, thereby preventing water from flowing into the upper power module 55 in the case of a water leakage situation.

A cover drain hole 567 may be formed in the cover flat portion 560b of the bottom cover 56. The cover drain hole 567 may be positioned outside the bottom cover 56 having a relatively low height and may pass through the cover bottom surface 560 of the bottom cover 56. Therefore, the water introduced into the bottom cover 56 flows outward along the cover slant portion 560a and is discharged downward through the cover drain hole 567, thereby preventing the water from accumulating inside the bottom cover 56. Therefore, the upper power module 55 and the cover PCB 563 provided in the bottom cover 56 can be protected from leakage.

Meanwhile, the bottom cover 56 may be provided with a PCB accommodating portion 564. The PCB accommodating portion 564 may form a space in which the cover PCB 563 is accommodated and may be formed in a shape in which the lower surface and both extended ends are opened. The PCB accommodating portion 564 may be disposed over the half region of the bottom cover 56.

In detail, the PCB accommodating portion 564 may be positioned on one side of both sides with respect to the center of the bottom cover 56 and may be positioned below the heater 54. A space in which the electric wires connected to the cover PCB 563, the upper power module 55, and the heater 54 are disposed may be provided at one side of the bottom cover 56 opposite to the position at which the PCB accommodating portion 564 is formed. The cover drain hole 567, the bottom rib 569, and the electric wire fixing portion 566 may also be disposed at a position opposite to the position of the PCB accommodating portion 564.

The PCB accommodating portion 564 may be formed along an accommodating portion opening 564a of the bottom of the bottom cover 56 and may be formed along the circumference of the bottom cover 56. The PCB accommodating portion 564 may be formed to have a predetermined height so as to accommodate the cover PCB 563.

Both ends of the PCB accommodating portion 564 may be opened toward the inner side of the bottom cover 56. A terminal 563c, to which the electric wire is connected, may be provided at the end of the cover PCB 563 exposed through the opening.

The PCB accommodating portion 564 may include a side surface portion 564c extending vertically along the inner edge and the outer edge of the accommodating portion opening 564a and an upper surface portion 564d connecting both ends of the side surface portion 564c. Meanwhile, since a mica sheet 565 is mounted on the upper surface portion 564d, the upper surface portion 564d may be referred to as a sheet mounting portion 564d.

The mica sheet 565 is formed to have a size and a shape corresponding to those of the cover PCB 563 and is disposed on the upper surface of the sheet mounting portion 564d. Therefore, the cover PCB 563 may be thermally and electrically insulated such that the cover PCB 563 is protected from abnormal operations.

Sheet fixing portions 564b may be formed in the sheet mounting portion 564d so as to fix the mica sheet 565. The sheet fixing portions 564b may be formed at both ends of the sheet mounting portion 564d, and an additional sheet fixing portion 564b may be further formed between the sheet fixing portions 564b on both sides. The sheet fixing portions 564b may restrain the end of the mica sheet 565 such that the mica sheet 565 maintains the state of being mounted on the sheet mounting portion 564d.

Meanwhile, the cover PCB 563 may be provided inside the PCB accommodating portion 564 and may have a shape corresponding to the accommodating portion opening 564a. The cover PCB 563 may be mounted on the cover plate 565 that covers the accommodating portion opening 564a.

The cover PCB 563 may be connected to the heater 54 and the upper power module 55 and may be configured to supply power to the heater 54. The cover PCB 563 may be connected to the handle PCB 43 provided in the handle cover 32 such that the operation of the heater 54 is controlled by the operation of the operation portion 323.

The cover PCB 563 may be provided with a buzzer 563b. When it is necessary to notify the operation of the electric kettle 1, the buzzer 563b may notify the state by outputting a beep sound. For example, when the power is supplied by mounting the assembled body 10 on the base 60, the buzzer 563b outputs a notification sound to allow the user to recognize that the electric kettle is ready to operate, without checking the display. Instead of the buzzer 563b, a speaker may be provided. The buzzer 563b may be referred to as a sound output device.

Meanwhile, a PCB hole 563a may penetrate through the cover PCB 563. The PCB hole 563a may be formed to have a size corresponding to that of a fixing boss 562a protruding from the cover plate 565. Therefore, when the cover PCB 563 is mounted on the cover plate 565, the fixing boss 562a passes through the PCB hole 563a. The cover PCB 563 may maintain the state of being fixedly mounted on the cover plate 565 and may be detached together with the cover plate 565 when the cover plate 565 is detached.

The cover plate 565 may be formed in a shape corresponding to that of the accommodating portion opening 564a and may cover the accommodating portion opening 564a. The cover plate 565 may be provided with a pair of fixing ends 562b and the fixing boss 562a so as to be fixedly mounted on the bottom cover 56 in the mounted state.

The fixing boss 562a is formed at the center of the cover plate 565 and protrudes upward. A screw, which passes through the fixing boss 562a, may be coupled to a coupling portion 761b protruding downward from the inside of the PCB accommodating portion 564 to fix the cover plate 565. The fixing ends 562b may protrude from both ends of the cover plate 565 and may be inserted, caught, and restrained into both ends of the accommodating portion opening 564a when the cover plate 565 is mounted. The fixing ends 562b may protrude upward and forward from the end of the cover plate 565 to be caught and restrained to both sides of the accommodating portion opening 564a.

Meanwhile, a plurality of support ribs 562c may protrude from the cover plate 565. The support ribs 562c may connect inner end and the outer end of the cover plate 565, and a plurality of support ribs 562c may be radially arranged. Therefore, the cover PCB 563 may be supported from below when the cover PCB 563 is mounted, and the cover PCB 563 may maintain a stably mounted state.

Meanwhile, in order to use the electric kettle 1 in a state in which the bottom cover 56 is mounted on the body 10, the electric kettle 1 may be seated on the base 60. When the body 10 is seated on the base 60, the upper power module 55 and the lower power module 64 may be in contact with each other and may be in a state in which power can be supplied to the heating module 50.

Hereinafter, the structure of the base 60 will be described in more detail with reference to the accompanying drawings.

### [Structure of Base]

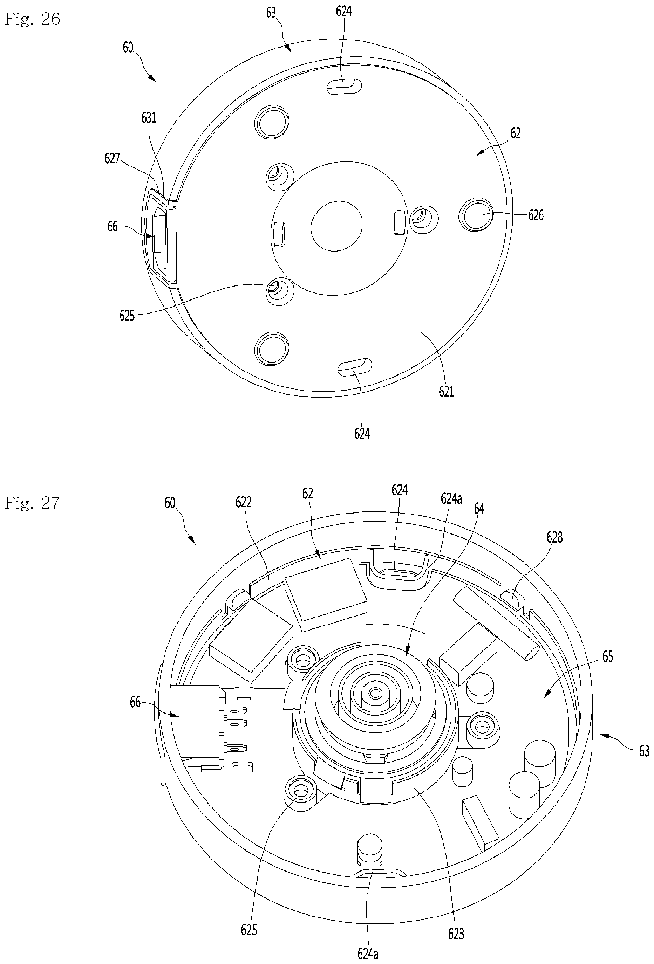

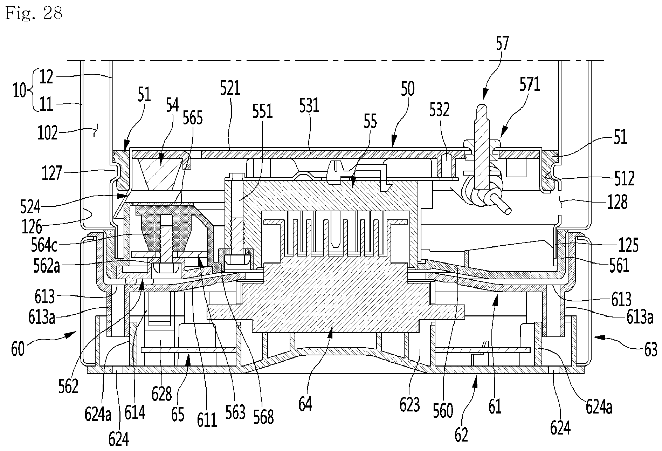

Fig. 25 is a perspective view of the base that is one component of the electric kettle, when viewed from above. Fig. 26 is a perspective view of the base that is one component of the electric kettle, when viewed from below. Fig. 27 is a perspective view showing a state in which a base cover of the base is removed. Fig. 28 is a cross-sectional view showing the mounting state of the heating module and the base.

As shown in Figs. 25 to 28, the base 60 may be formed in a shape corresponding to the cross-sectional shape of the body 10 and may be configured to allow the body 10 to be seated on the upper surface of the base 60. Power can be supplied to the body 10 in a state in which the body 10 is seated on the base 60, and the outer surface of the body 10 and the outer surface of the base 60 fare coplanar, thereby providing the sense of unity.

In detail, the overall appearance of the base 60 may be formed by the base cover 61 forming the upper surface, the base body 62 forming the lower surface, and the side plate 63 forming the circumferential surface between the base body 62 and the base cover 61.

The base cover 61 is formed to have a diameter corresponding to that of the body 10 and is formed to allow the lower surface of the body 10 to be seated. The base cover 61 may include a base upper surface 611 forming the upper surface of the base 60 and a base cover rim 612 protruding upward along the circumference of the base upper surface 611.

The base upper surface 611 is a portion on which the bottom cover 56 is seated when the body 10 is mounted on the base 60, and may be formed in a shape corresponding to that of the bottom surface of the bottom cover 56.

In detail, a lower module hole 611c, through which the lower power module 64 passes, may be formed at the center of the base upper surface 611. The lower power module 64 may protrude upward through the lower module hole 611c.

The base upper surface 611 may include an upper slant portion 611a and an upper flat portion 611b. The upper slant portion 611a is formed to be slanted from the lower module hole 611c toward the outside. The upper flat portion 611b may be formed to be horizontal to the ground from the upper slant portion 611a to the base cover rim 612.

Therefore, the base upper surface 611 may be formed in a shape in which the central portion from which the lower power module 64 slightly protrudes, and thus, even when water leakage occurs in the body 10, water does not flow into the lower power module 64 but flows toward the upper flat portion 611b.

An upper drain hole 613 may be formed in the upper flat portion 611b. The upper drain hole 613 is a passage for draining water flowing down to the base 60 under the base 60 and may be opened at the outer end of the upper flat portion 611b. A plurality of upper drain holes 613 may be formed in a direction facing each other. In addition, a hole guide 613a extending downward may be formed around the upper drain hole 613. The hole guide 613a may extend to a position adjacent to the bottom surface of the base body 62 and may guide water to be discharged to the lower drain hole 624 described below.

Meanwhile, the base cover rim 612 may be formed at a height equal to or slightly higher than that of the bottom cover 56. The base cover rim 612 may support the outer lower end portion 113 when the body 10 is mounted.

The base body 62 may include a base bottom surface 621 formed in a disk shape having a size corresponding to that of the base cover 61, and a base rim 622 bent upward along the circumference of the base bottom surface 621. The center of the base body 62 may protrude upward, and a power module mounting portion 623 on which the lower power module 64 is mounted may be formed at the protruded central portion. The lower power module 64 may be disposed at a position corresponding to the upper power module 55 and may protrude upward through the lower module hole 611c. Therefore, when the body 10 is seated on the base 60, the upper power module 55 and the lower power module 64 may be in contact with each other to thereby become a state capable of supplying power.

One or more base coupling bosses 625 may be formed outside the power module mounting portion 623. The one or more base coupling bosses 625 may be spaced apart from the power module mounting portion 623. The base coupling boss 625 may protrude upward and may extend through the base PCB 65 inside the base body 62. Screws may be coupled to the base coupling bosses 625, and the screws may be coupled to the base cover 61 by passing through the base coupling bosses 625. Therefore, the base body 62 and the base cover 61 may be firmly connected to each other by the screws.

The base PCB 65 may be mounted along a space between the power module mounting portion 623 and the base rim 622 and may be formed in a corresponding shape. The base PCB 65 may be connected to the lower power module 64 and a power connector 66 described below and may be configured to control the operation and power supply of the lower power module 64.

A lower drain hole 624 may be formed in the base bottom surface 621 adjacent to the base rim 622. The lower drain hole 624 may be formed at a position corresponding to the upper drain hole 613. A partition wall 624a extending upward may be formed in the circumference of the lower drain hole 624. The lower drain hole 624 is a passage through which the water flowing down through the upper drain hole 613 and the hole guide 613a is discharged to the outside of the base 60 and may pass through the base bottom surface 621. The partition wall 624a forms a space partitioned such that water flowing toward the lower drain hole 624 does not overflow to the outside, and the lower end of the hole guide 613a is accommodated inside the partition wall 624a. The partition wall 624a may be formed to be higher than the lower end of the hole guide 613a and may be connected to the base rim 622. A plurality of lower drain holes 624 and a plurality of partition walls 624a may be formed and may be spaced apart from each other.

In addition, a base hook 628 may be formed at one side of the base rim 622. The base hook 628 may be formed by cutting out a part of the base rim 622 and may extend upward. The end of the base hook 628 may be caught and restrained to a base connecting portion of the base cover 61. The base body 62 and the base cover 61 may maintain the connected state by the connection of the base hook 628 and the base connecting portion 614. A plurality of base hooks 628 may be formed along the base rim 622, and thus the circumferential surface of the base 60 may maintain the firmly connected state.

Meanwhile, a connector mounting portion 627, to which the power connector 66 is connected, may be formed at one side of the base body 62. The power connector 66 is a portion to which the end of a power cable including a plug can be connected, wherein the power cable is connected to a power outlet and may be formed such that the power cable is detachable. The power connector 66 may be exposed to the side of the base 60 and may be mounted on the connector mounting portion 627.

The connector mounting portion 627 is opened to allow the power connector 66 to be inserted thereinto, and the portion opened through the opening of the side plate 63 may be exposed to the outside. The opened end of the connector mounting portion 627 protrudes more than the end of the power connector 66 and is formed in a shape protruding from the side plate 63. Therefore, when water overflows or flows down to the base 60, water may be blocked from flowing into the side plate 63.

The side plate 63 connects the base body 62 to the base cover 61 and may form the side circumference of the base 60. The side plate 63 may be made of the same metal material as that of the body 10, and the side plate 63 and the body 10 may have the sense of unity in a state in which the body 10 is mounted on the base 60.

The upper and lower ends of the side plate 63 may be bent, and the ends of the base body 62 and the base cover 61 may be supported. A side opening 631, which is cut to expose the connector mounting portion 627, may be formed in the side plate 63.

Hereinafter, the operation of the electric kettle having the above-mentioned structure according to one embodiment of the present disclosure will be described.

### [Operation of Electric Kettle]

In order to use the electric kettle 1, the user connects the power supply by inserting the power cable connected to the base 60 into the outlet. In this state, water is filled in the heating space 101 inside the body 10, and the body 10 is placed on the base 60.

When the body 10 is seated on the base 60, the upper power module 55 and the lower power module 64 are in contact with each other and are in a state in which power can be supplied from the base 60 to the body 10. The buzzer 563b outputs the notification sound when the body 10 is seated on the base 60, and the notification sound of the buzzer 563b makes it possible for the user to recognize that the body 10 is normally seated on the base 60 and is in an operable state.

Next, the user may start the heating of the heater 54 by operating the operation portion 323 of the handle 40. At this time, the user can check the set temperature through the display 322, and can operate the operation portion 323 to start heating water contained in the heating space 101.

The operation of the heater 54 may be started according to the operation of the operation portion 323, and the water contained in the heating space 101 may be heated by the heat of the heater 54 depending on the set temperature. When the temperature sensor 57 senses that the water inside the heating space 101 reaches the set temperature, the heater 54 stops operating and the electric kettle 1 completes the operation.

When the operation of the electric kettle 1 is completed, the buzzer 563b may output a beep sound notifying the completion of the operation. The user may hold the handle 40 and lift the body 10 to separate the base 60, and may tilt the electric kettle 1 to pour the heated water through the spout 311.

The electric kettle 1 can reduce or block heat conduction by the double structure of the body 10 in a state in which the heating of the water is completed. Therefore, even when the user comes into contact with the outer surface of the body 10, the safety of the user can be secured because the outer surface of the body 10 is not excessively hot. Even when the heater 54 is not in operation, the temperature of the heated water can be maintained for a long time.

The electric kettle according to the embodiment of the present disclosure may expect the following effects.

In the electric kettle according to the embodiment of the present disclosure, the stainless steel body has the double structure of the inner body and the outer body. The heat insulation space may be formed between the inner body and the outer body. Therefore, it is possible to minimize the heat generated during the heating of the water to the outside of the body and ensure the safety of the user.

Also, the water heated inside the body may be insulated by the structure of the body to maintain the heated temperature, and unnecessary reheating may be prevented by maintaining the temperature, thereby reducing the power consumption.

The mounting port passing through the outer body and the inner body is formed, and the window is mounted on the mounting port to enable the internal state of the body to be visually checked. Therefore, the user can intuitively check the water level or the state of the water inside the body, thereby improving use convenience.

The window gasket is mounted on the outer mounting portion formed in the outer body, and the window is press-fitted into the window gasket, thereby sealing a space between the window and the body.

In particular, the circumference of the window is in contact with both the window gasket and the outer mounting portion, thereby enabling double sealing and providing a more reliable sealing structure.

In addition, the window is press-fitted into the window gasket in a state in which the window gasket is mounted, thereby maintaining the fixedly mounted state. Therefore, the window has a very simple structure for sealing and mounting, and the mounting work is also very easy, thereby remarkably improving assembly workability and productivity.

The outer mounting portion is bent backward, and the bent outer mounting portion is in surface contact with the circumferential surface of the window. Therefore, there is an advantage that a clean appearance is provided by preventing a gap between the outer body and the window from occurring.

The window gasket may be pressurized and fixed by the side protrusion protruding from the side of the window. Therefore, it is possible to prevent the gasket from being released and it is possible to ensure the sealing between the window and the inner body.

In addition, the side protrusion may support the bent end of the outer mounting portion to prevent the outer body around the window from being deformed or pressed by the external force, thereby maintaining the appearance state.

Although embodiments have been described with reference to a number of illustrative embodiments thereof, it should be understood that numerous other modifications and embodiments can be devised by those skilled in the art that will fall within the scope of the invention. More particularly, various variations and modifications are possible in the component parts and/or arrangements of the subject combination arrangement within the scope of the appended claims. In addition to variations and modifications in the component parts and/or arrangements, alternative uses will also be apparent to those skilled in the art.

## Claims

1. An electric kettle comprising:
a body (10) made of a metal material, comprising an outer body (11) and an inner body (12) having a cylindrical shape with an opened upper surface and an opened lower surface, wherein a heat insulation space (102) is formed between the outer body (11) and the inner body (12);
a heating module (50) forming a bottom of a space (101) for accommodating water inside the body and for heating the water;
a mounting port (116) passing through the outer body (11) and the inner body (12);
a window (13) mounted on a mounting port (116) to see through into the inside of the body (10), wherein the window (13) comprises a window front surface (131) formed in a shape corresponding to the mounting port (116) and a window side surface (132) extending rearward along a circumference of the window front surface (131);
a window gasket (135) disposed along a circumference of the window (13) to seal a gap between the inner body (12) and the window (13); and
a side protrusion (133) formed on the window side surface (132) for fixing the window gasket (135);
wherein the window (13) is doubly sealed in contact with the outer body (11) and the window gasket (135).

2. The electric kettle according to claim 1, wherein the window (13) extends between an upper end of the heating module (50) and an upper end of the body (10) in a vertical direction.

3. The electric kettle according to claim 1 or 2, wherein a front surface of the window (13) covers the mounting port (116), and the front surface of the window (13) and the outer body (11) are coplanar.

4. The electric kettle according to any one of the claims 1, 2 or 3, wherein a circumferential surface of the window (13) extends rearward so as to be in contact with both the outer body (11) and the inner body (12) on which the window gasket (135) is mounted.

5. The electric kettle according to any one of the preceding claims, wherein the window (13) comprises:
a window flange (134) extending outward along a circumference of the see-through side surface (132); and
wherein the side protrusion (133) is protruded at a position spaced apart from the window flange (134).

6. The electric kettle according to claim 1, wherein the window side surface (132) corresponds to a distance between the outer body (11) and the inner body (12).

7. The electric kettle according to any one of the preceding claims, wherein an outer mounting portion (115) bent toward the inner body (12) along the mounting port (116) is formed in the outer body (11), and/or
the outer mounting portion (115) is in contact with the window side surface (132).

8. The electric kettle according to claim 5, wherein an inner mounting portion (117) stepped toward the outer body (11) along the mounting port (116) is formed in the inner body (12), and/or
the window gasket (135) and the window flange (134) are seated on the inner mounting portion (117).

9. The electric kettle according to claim 8, wherein an end of the outer mounting portion (115) further extends toward the window side surface (132) than an end of the inner mounting portion (117).

10. The electric kettle according to claim 8 or 9, wherein the inner mounting portion (117) is formed to have a width corresponding to a width of the window flange (134).

11. The electric kettle according to any one of the preceding claims, wherein a plurality of side protrusions (133) protruding outward are formed along the window side surface (132), and/or a front surface of the side protrusion (133) supports an end of the outer mounting portion (115), and/or a rear surface of the side protrusion (133) supports the window gasket (135).

12. The electric kettle according to claim 5, wherein the window gasket (135) is mounted along an end of the opened inner body (12) and is press-fitted between the window flange (134) and the side protrusion (133) protruding along the window side surface (132).

13. The electric kettle according to any one of the preceding claims 5-12, wherein the window gasket (135) comprises at least one:
a first rib (135a) disposed along the window flange (134) and seated on the window flange (134);
a second rib (135b) positioned at a front side spaced apart from the first rib (135a) and formed along the first rib (135a); and
a connecting portion (135d) connecting ends of the first rib (135a) and the second rib (135b) and to be in contact with the window side surface (132), and
wherein an insertion groove (135c), into which the end of the opened inner body (12) is inserted, is formed between the first rib (135a) and the second rib (135b).

14. The electric kettle according to claim 13, wherein a width of the second rib (135b) is narrower than a width of the first rib (135a).

15. The electric kettle according to claim 13 or 14, wherein a protrusion (135e) and a groove (134a) engaged with each other are formed on surfaces where the window flange (134) and the first rib (135a) face each other.

## Patentansprüche

1. Wasserkocher, der Folgendes umfasst:
einen Körper (10), der aus einem metallischen Material hergestellt ist, der einen Außenkörper (11) und einen Innenkörper (12) umfasst, der eine zylindrische Form mit einer offenen oberen Oberfläche und einer offenen unteren Oberfläche aufweist, wobei ein Wärmeisolationsraum (102) zwischen dem Außenkörper (11) und dem Innenkörper (12) ausgebildet ist;
ein Heizmodul (50), das einen Boden eines Raums (101) zum Aufnehmen von Wasser im Inneren des Körpers und zum Erhitzen des Wassers bildet;
eine Montageöffnung (116), die durch den Außenkörper (11) und den Innenkörper (12) verläuft;
ein Fenster (13), das an der Montageöffnung (116) montiert ist, so dass man hindurch in das Innere des Körpers (10) sehen kann, wobei das Fenster (13) eine vordere Fensterfläche (131), die in einer Form ausgebildet ist, die der Montageöffnung (116) entspricht, und eine seitliche Fensterfläche (132), die sich längs eines Umfangs der vorderen Fensterfläche (131) nach hinten erstreckt, umfasst;
eine Fensterdichtung (135), die längs des Umfangs des Fensters (13) angeordnet ist, um einen Spalt zwischen dem Innenkörper (12) und dem Fenster (13) abzudichten; und
einen seitlichen Vorsprung (133), der an der seitlichen Fensterfläche (132) ausgebildet ist, um die Fensterdichtung (135) zu fixieren;
wobei das Fenster (13) in Kontakt mit dem Außenkörper (11) und der Fensterdichtung (135) doppelt abgedichtet ist.

2. Wasserkocher nach Anspruch 1, wobei sich das Fenster (13) zwischen einem oberen Ende des Heizmoduls (50) und einem oberen Ende des Körpers (10) in einer vertikalen Richtung erstreckt.

3. Wasserkocher nach Anspruch 1 oder 2, wobei eine vordere Oberfläche des Fensters (13) die Montageöffnung (116) bedeckt und wobei die vordere Oberfläche des Fensters (13) und der Außenkörper (11) koplanar sind.

4. Wasserkocher nach einem der Ansprüche 1, 2 oder 3, wobei sich eine Umfangsfläche des Fensters (13) nach hinten erstreckt, so dass sie mit dem Außenkörper (11) und dem Innenkörper (12), an dem die Fensterdichtung (135) montiert ist, in Kontakt ist.

5. Wasserkocher nach einem der vorhergehenden Ansprüche, wobei das Fenster (13) Folgendes umfasst:
einen Fensterflansch (134), der sich längs des Umfangs der seitlichen Fläche zum Hindurchsehen nach außen erstreckt; und
wobei der seitliche Vorsprung (133) an einer Position vorsteht, die von dem Fensterflansch (134) beabstandet ist.

6. Wasserkocher nach Anspruch 1, wobei die seitliche Fensterfläche (132) einem Abstand zwischen dem Außenkörper (11) und dem Innenkörper (12) entspricht.

7. Wasserkocher nach einem der vorhergehenden Ansprüche, wobei ein äußerer Montageabschnitt (115), der längs der Montageöffnung (116) in Richtung des Innenkörpers (12) gebogen ist, im Außenkörper (11) ausgebildet ist, und/oder
der äußere Montageabschnitt (115) mit der seitlichen Fensterfläche (132) in Kontakt ist.

8. Wasserkocher nach Anspruch 5, wobei ein innerer Montageabschnitt (117), der längs der Montageöffnung (116) in Richtung des Außenkörpers (11) abgestuft ist, im Innenkörper (12) ausgebildet ist, und/oder
die Fensterdichtung (135) und der Fensterflansch (134) auf dem inneren Montageabschnitt (117) sitzen.

9. Wasserkocher nach Anspruch 8, wobei sich ein Ende des äußeren Montageabschnitts (115) weiter in Richtung der seitlichen Fensterfläche (132) erstreckt als ein Ende des inneren Montageabschnitts (117).

10. Wasserkocher nach Anspruch 8 oder 9, wobei der innere Montageabschnitt (117) so ausgebildet ist, dass er eine Breite hat, die einer Breite des Fensterflansches (134) entspricht.

11. Wasserkocher nach einem der vorhergehenden Ansprüche, wobei mehrere seitliche Vorsprünge (133), die nach außen vorstehen, längs der seitlichen Fensterfläche (132) ausgebildet sind und/oder eine vordere Fläche des seitlichen Vorsprungs (133) ein Ende des äußeren Montageabschnitts (115) hält und/oder eine hintere Fläche des seitlichen Vorsprungs (133) die Fensterdichtung (135) hält.

12. Wasserkocher nach Anspruch 5, wobei die Fensterdichtung (135) längs eines Endes des offenen Innenkörpers (12) montiert ist und zwischen dem Fensterflansch (134) und dem seitlichen Vorsprung (133), der längs der seitlichen Fensterfläche (132) vorsteht, mittels Presspassung eingesetzt ist.

13. Wasserkocher nach einem der vorhergehenden Ansprüche 5-12, wobei die Fensterdichtung (135) wenigstens eines der folgenden Elemente umfasst:
eine erste Rippe (135a), die längs des Fensterflansches (134) angeordnet ist und auf dem Fensterflansch (134) sitzt;
eine zweite Rippe (135b), die an einer Vorderseite positioniert ist, die von der ersten Rippe (135a) beabstandet ist und längs der ersten Rippe (135a) ausgebildet ist; und
einen Verbindungsabschnitt (135d), der Enden der ersten Rippe (135a) und der zweiten Rippe (135b) verbindet und mit der seitlichen Fensterfläche (132) in Kontakt ist, und
wobei eine Einsetzrille (135c), in die das Ende des offenen Innenkörpers (12) eingesetzt ist, zwischen der ersten Rippe (135a) und der zweiten Rippe (135b) ausgebildet ist.

14. Wasserkocher nach Anspruch 13, wobei eine Breite der zweiten Rippe (135b) schmaler als eine Breite der ersten Rippe (135a) ist.

15. Wasserkocher nach Anspruch 13 oder 14, wobei ein Vorsprung (135e) und eine Rille (134a), die miteinander in Eingriff gelangen, an Flächen ausgebildet sind, bei denen der Fensterflansch (134) und die erste Rippe (135a) zueinander zeigen.

## Revendications

1. Bouilloire électrique comportant :
un corps (10) constitué d'un matériau métallique, comportant un corps extérieur (11) et un corps intérieur (12) ayant une forme cylindrique avec une surface supérieure ouverte et une surface inférieure ouverte, dans laquelle un espace d'isolation thermique (102) est formé entre le corps extérieur (11) et le corps intérieur (12) ;
un module de chauffage (50) formant un fond d'un espace (101) pour recevoir de l'eau à l'intérieur du corps et pour chauffer l'eau ;
un orifice de montage (116) passant à travers le corps extérieur (11) et le corps intérieur (12) ;
une fenêtre (13) montée sur un orifice de montage (116) pour voir à travers dans l'intérieur du corps (10), dans laquelle la fenêtre (13) comporte une surface avant de fenêtre (131) formée avec une forme correspondant à l'orifice de montage (116) et une surface latérale de fenêtre (132) s'étendant vers l'arrière le long d'une circonférence de la surface avant de fenêtre (131) ;
un joint de fenêtre (135) disposé le long d'une conférence de la fenêtre (13) pour étanchéifier un interstice entre le corps intérieur (12) et la fenêtre (13) ; et
une saillie latérale (133) formée sur la surface latérale de fenêtre (132) pour fixer le joint de fenêtre (135) ;
dans laquelle la fenêtre (13) est doublement étanchéifiée en contact avec le corps extérieur (11) et le joint de fenêtre (135).

2. Bouilloire électrique selon la revendication 1, dans laquelle la fenêtre (13) s'étend entre une extrémité supérieure du module de chauffage (50) et une extrémité supérieure du corps (10) dans une direction verticale

3. Bouilloire électrique selon la revendication 1 ou 2, dans laquelle une surface avant de la fenêtre (13) recouvre l'orifice de montage (116), et la surface avant de la fenêtre (13) et le corps extérieur (11) sont coplanaires.

4. Bouilloire électrique selon l'une quelconque des revendications 1, 2 ou 3, dans laquelle une surface circonférentielle de la fenêtre (13) s'étend vers l'arrière de manière à être en contact à la fois avec le corps extérieur (11) et le corps intérieur (12) sur lequel le joint de fenêtre (135) est monté.

5. Bouilloire électrique selon l'une quelconque des revendications précédentes, dans laquelle la fenêtre (13) comporte :
un rebord de fenêtre (134) s'étendant vers l'extérieur le long d'une circonférence de la surface latérale transparente (132) ; et
dans laquelle la saillie latérale (133) fait saillie à une position espacée du rebord de fenêtre (134).

6. Bouilloire électrique selon la revendication 1, dans laquelle la surface latérale de fenêtre (132) correspond à une distance entre le corps extérieur (11) et le corps intérieur (12).

7. Bouilloire électrique selon l'une quelconque des revendications précédentes, dans laquelle une partie de montage extérieure (115) pliée vers le corps intérieur (12) le long de l'orifice de montage (116) est formée dans le corps extérieur (11), et/ou
la partie de montage extérieure (115) est en contact avec la surface latérale de fenêtre (132).

8. Bouilloire électrique selon la revendication 5, dans laquelle une partie de montage extérieure (117) étagée vers le corps extérieur (11) le long de l'orifice de montage (116) est formée dans le corps intérieur (12), et/ou
le joint de fenêtre (135) et le rebord de fenêtre (134) sont en appui sur la partie de montage intérieure (117).

9. Bouilloire électrique selon la revendication 8, dans laquelle une extrémité de la partie de montage extérieure (115) s'étend vers la surface latérale de fenêtre (132) plus loin qu'une extrémité de la partie de montage intérieure (117).

10. Bouilloire électrique selon la revendication 8 ou 9, dans laquelle la partie de montage intérieure (117) est formée pour avoir une largeur correspondant à une largeur du rebord de fenêtre (134).

11. Bouilloire électrique selon l'une quelconque des revendications précédentes, dans laquelle les saillies d'une pluralité de saillies latérales (133) faisant saillie vers l'extérieur sont formées le long de la surface latérale de fenêtre (132), et/ou une surface avant de la saillie latérale (133) supporte une extrémité de la partie de montage extérieure (115), et/ou une surface arrière de la partie latérale (133) supporte le joint de fenêtre (135).

12. Bouilloire électrique selon la revendication 5, dans laquelle le joint de fenêtre (135) est monté le long d'une extrémité du corps intérieur ouvert (12) et est ajusté par pression entre le rebord de fenêtre (134) et la saillie latérale (133) faisant saillie le long de la surface latérale de fenêtre (132).

13. Bouilloire électrique selon l'une quelconque des revendications 5 à 12 précédentes, dans laquelle le joint de fenêtre (135) comporte au moins élément parmi :
une première nervure (135a) disposée le long du rebord de fenêtre (134) et en appui sur le rebord de fenêtre (134) ;
une seconde nervure (135b) positionnée sur un côté avant espacé de la première nervure (135a) et formée le long de la première nervure (135a) ; et
une partie de liaison (135d) reliant des extrémités de la première nervure (135a) et de la seconde nervure (135b) et pour être en contact avec la surface latérale de fenêtre (132), et
dans laquelle une rainure d'insertion (135c), dans laquelle l'extrémité du corps intérieur ouvert (12) est insérée, est formée entre la première nervure (135a) et la seconde nervure (135b).

14. Bouilloire électrique selon la revendication 13, dans laquelle une largeur de la seconde nervure (135b) est plus étroite qu'une largeur de la première nervure (135a).

15. Bouilloire électrique selon la revendication 13 ou 14, dans laquelle une saillie (135e) et une rainure (134a) en prise l'une avec l'autre sont formées sur les surfaces où le rebord de fenêtre (134) et la première nervure (135a) sont dirigés l'une vers l'autre.
